(19) Europäisches Patentamt
European Patent Office
Office européen des brevets

(11) **EP 1 780 334 A1**

(12) **EUROPÄISCHE PATENTANMELDUNG**
veröffentlicht nach Art. 158 Abs. 3 EPÜ

(43) Veröffentlichungstag:
**02.05.2007 Patentblatt 2007/18**

(51) Int Cl.:
*E01C 7/26* (2006.01)     *C08L 95/00* (2006.01)
*C08K 3/34* (2006.01)

(21) Anmeldenummer: **04807433.0**

(22) Anmeldetag: **21.12.2004**

(86) Internationale Anmeldenummer:
**PCT/JP2004/019076**

(87) Internationale Veröffentlichungsnummer:
**WO 2005/124026 (29.12.2005 Gazette 2005/52)**

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **16.06.2004 DE 102004029869**

(71) Anmelder:
• **BUNDESANSTALT FÜR MATERIALFORSCHUNG UND -PRUFUNG (BAM)**
**D-12205 Berlin (DE)**
• **HOTTA, Takeji**
**Nagoya-shi Aichi 4580816 (JP)**

(72) Erfinder:
• **MULLER, Renate;**
**c/o BAM**
**Berlin**
**D12205 (DE)**

• **PIRSKAWETZ, Stephan;2c/o BAM**
**Berlin**
**D12205I (DE)**
• **RECKNAGEL, Christoph;**
**c/o BAM**
**Berlin**
**D12205 (DE)**
• **VATER, Ernst-Joachim;**
**c/o BAM**
**Berlin**
**D12205 (DE)**
• **WEISE, Frank;**
**c/o BAM**
**Berlin**
**D12205 (DE)**

(74) Vertreter: **Reinstädler, Diane**
**Anwaltskanzlei**
**Gulde Hengelhaupt Ziebig & Schneider**
**Wallstrasse 58/59**
**10179 Berlin (DE)**

(54) **STRASSENBELAG**

(57) [AUFGABE] Asphaltstraßenbelag mit hoher Reflektivität, Wärmeleitfähigkeit und verbesserten thermomechanischen Eigenschaften. [LÖSUNGSMITTEL] Der Straßenbelag (10) umfasst mindestens eine Asphaltschicht (12, 14), die ein Gemisch aus mindestens einem Mineralstoff (16, 22) und einem Bindemittel (18, 24) enthält, wobei die Asphaltschicht (12, 14) insbesondere eine oben liegende Deckschicht (14) und eine darunter liegende Binderschicht (12) umfasst. Mindestens 60 M-% des Mineralstoffs (16, 22) der mindestens einen Asphaltschicht (12, 14) ist kristalliner Quarz. Vorzugsweise wird ausschließlich kristalliner Quarz als Mineralstoff für die Deckschicht (14) und die Binderschicht (12) verwendet. Der erfindungsgemäße Straßenbelag (10) zeichnet sich durch ein hohes Reflexions- und Wärmeeindringvermögen sowie durch eine sehr hohe Standfestigkeit bei hoher thermomechanischer Beanspruchung aus.

Fig. 1

EP 1 780 334 A1

**Beschreibung**

Die Erfindung betrifft einen Straßenbelag (Fahrbahndecke), insbesondere einen Asphaltstraßenbelag für Kraftfahrzeugverkehr.

Heutige Straßenbefestigungen setzen sich aus einem Unterbau, der künstlich angeschüttet und verdichtet wird (Dammbauweise), und dem schichtweise aufgebauten Oberbau, welcher aus der Tragschicht und der Fahrbahndecke besteht, zusammen. Aufgabe der Fahrbahndecke ist es, dem Verkehr eine dauerhaft verkehrssichere und befahrbare Oberfläche zu bieten und die darunter liegende Tragschicht gegen unmittelbare Einwirkungen aus Witterung und Verkehr zu schützen. Die Fahrbahndecke leistet im festen Verbund mit der Tragschicht auch einen Beitrag zur Tragfähigkeit der Gesamtkonstruktion. Im Wesentlichen werden Asphaltdecken, Betondecken und Pflasterdecken unterschieden, wobei vorliegend ausschließlich Asphaltdecken von Bedeutung sind. Die Decke setzt sich ihrerseits üblicherweise aus einer oben liegenden Deckschicht und einer zwischen Tragschicht und Deckschicht angeordneten Binderschicht zusammen. Dabei wird vorliegend nach DIN 55946 unter Asphalt ein "natürlich vorkommendes oder technisch hergestelltes Gemisch aus Bitumen oder bitumenhaltigen Bindemitteln und Mineralstoffen sowie gegebenenfalls weiteren Zuschlägen und/oder Zusätzen" verstanden. Mit Bitumen werden hochmolekulare Kohlenwasserstoffgemische bezeichnet, die bei der Erdöldestillation als Rückstand gewonnen werden. Bitumen liegt als kolloiddisperses Zweiphasensystem von festen Asphaltenen und zähflüssigem Öl vor und ist in der Regel dunkelfarbig. Daneben können zur Herstellung von Asphalten auch synthetische Bindemittel Anwendung finden. Vorliegend wird der Begriff Bindemittel als Oberbegriff für Bitumen, bitumenhaltige und synthetische Bindemittel verwendet.

Straßenbeläge sind in Abhängigkeit von klimatischen Bedingungen und Verkehrsaufkommen thermischen und mechanischen Belastungen ausgesetzt, welche zu unterschiedlichsten Schädigungsbildern führen können. So führt die durch Sonneneinstrahlung und hohe Lufttemperaturen verursachte Erwärmung der Straßendecke zu einer Plastifizierung des Bindemittels, die in Verbindung mit der mechanischen Verkehrsbelastung eine Spurrinnenbildung hervorrufen kann. Zusätzlich können in den so vorgeschädigten Bereichen bei winterlicher Abkühlung und gleichzeitig hohen mechanischen Belastungen Längsrisse auftreten. Sowohl thermische als auch mechanische Belastungen treten verstärkt in Großstädten auf. Einerseits tritt hier ein als Heat-Island-Phänomen bekannter Umstand auf, wonach an heißen Sommertagen die Lufttemperatur in Ballungsräumen erheblich höher als in umliegenden ländlichen Gebieten ist. Diese Erscheinung lässt sich auf verschiedene Faktoren zurückführen, darunter erhöhte Wärmeabgabe durch Industrie und Autos, Speicherung der eingestrahlten Wärme durch die Bebauung, Verminderung der konvektiven Wärmeabfuhr durch Wind infolge dichter Bebauung sowie Verminderung der natürlichen Abkühlung über Wasserverdunstung durch reduzierte Grünflächen. Aus mechanischer Sicht wirken sich in Großstädten das hohe Verkehrsaufkommen, verminderte Durchschnittsgeschwindigkeit sowie unterbrochener Verkehrsfluss besonders negativ aus. Der gleiche Einfluss wird durch die zunehmenden Achslasten ausgeübt.

Aus thermischer Sicht ist für die Spurrinnenbildung die Wärmebilanz auf der Fahrbahnoberfläche von zentraler Bedeutung. Hier treffen einerseits ein kurzwelliger Wärmestrom infolge gerichteter und diffuser Sonnenstrahlung sowie andererseits ein langwelliger Wärmestrom durch atmosphärische Gegenstrahlung auf. Abhängig vom Reflexionsvermögen der Fahrbahnoberfläche (der so genannten Albedo) wird ein Teil der kurzwelligen Strahlung reflektiert und der restliche Anteil absorbiert. Der aufgebrachte langwellige Wärmestrom hingegen wird nahezu unabhängig von der Beschaffenheit der Fahrbahnoberfläche mit einem Absorptionsgrad von etwa 0,95 absorbiert. Die von der Fahrbahnoberfläche absorbierten lang- und kurzwelligen Wärmestromanteile werden dann - abzüglich der an die Umgebungsluft abgegebenen Wärmeströme infolge Konvektion und Eigenstrahlung - in das Innere der Fahrbahnkonstruktion abgeführt. Die Wärmeabfuhr wird dabei neben dem Fahrbahnaufbau und den thermischen Randbedingungen maßgebend von dem Wärmeleitungs- und Wärmespeichervermögen der einzelnen Schichten und des Untergrundes bestimmt. Prinzipiell wird beim Wärmetransport von der Fahrbahnoberfläche zum Grundwasser ein Teil des eingespeisten Wärmestroms in der jeweiligen Schicht gespeichert und der restliche Teil an die nächste darunter liegende Schicht abgeführt. Als Beurteilungskriterium für die diesbezügliche komplexe thermische Bewertung der einzelnen Konstruktionsschichten und des Untergrundes eignet sich der Wärmeeindringkoeffizient b, ausgedrückt als $b = (\lambda \times \rho \times c_p)^{1/2}$, worin $\lambda$ die thermische Leitfähigkeit, $\rho$ die maximale trockene spezifische Dichte oder Raumdichte und $c_p$ die spezifische Wärmeleitfähigkeit ist. Materialeigenschaften, die zu einer hohen Aufheizung führen, sind demnach ein geringes Reflexionsvermögen der Deckschicht (geringe Albedo) sowie ein geringes Wärmeeindringvermögen der einzelnen Konstruktionsschichten der Fahrbahn.

Aus thermomechanischer Sicht führen eine geringe Biegesteifigkeit der Konstruktion aus Deck- und Binderschicht sowie unterschiedliche und hohe thermische Ausdehnungskoeffizienten der Baustoffe und Baustoffgemische zu den bekannten Schädigungsbildern.

Zur Verminderung der Oberflächentemperatur des Straßenbelags sind aktive Systeme bekannt, die mittels integrierter wasserführender Rohrleitungen die in die Fahrbahn eingespeiste Wärmeleistung konvektiv ableiten. Diese Systeme sind jedoch mit hohen Investitionskosten verbunden und erfordern spezielle geologische Voraussetzungen. Passive Systeme hingegen streben eine Reduzierung des Energieeintrags in den Straßenbelag und/oder eine Verbesserung der thermomechanischen Eigenschaften der Deck- und Binderschicht an. Hier kommen verschiedene Oberflächenbehandlungen der Deckschicht in Frage wie Anstrich, Oberflächenbeschichtung oder Abstreuung der Oberfläche. Der Anstrich mit speziell entwickelten Anstrichstoffen weist nachteilig eine geringe Verschleißfestigkeit unter Verkehrsbelastung auf. Das Gleiche gilt für Oberflächenbeschichtungen. So ist zum Beispiel das Aufbringen einer 8 bis 10 mm dicken Porzellanschicht auf die Fahrbahndecke bekannt. Diese weist jedoch eine geringe Wärmeableitung und einen mangelhaften Haftverbund mit den unteren Schichten sowie große Steifigkeitsunterschiede zu diesen auf.

Neben den dargestellten Oberflächenbehandlungen der Deckschicht kommt auch eine Modifikation der Bestandteile der Deckschicht in Frage. In diesem Zusammenhang ist vor allem der Einsatz heller Mineralstoffe in der Deckschicht bekannt. Als helle Mineralstoffe sind beispielsweise gebrannter Flint, Taunus-Quarzit, helle Granite, helle Granodiorite und Moränen bekannt. Naturgemäß nimmt die Helligkeit der Deckschicht mit dem Anteil der hellen Mineralstoffe im gesamten Haufwerk zu. Da jedoch die bekannten hellen Mineralstoffe eine geringere Schlagfestigkeit aufweisen, wird der Hauptanteil der eingesetzten Mineralstoffe mit dunklen schlagfesten Mineralstoffen ausgeführt, wodurch die aufhellende Wirkung teilweise aufgehoben wird. Bekannt ist beispielsweise, 50 M-% der feineren und mittleren Splittkörnungen aus hellen Mineralstoffen und die restlichen 50 M-% und das Grobkorn aus schlagfesten (dunklen) Mineralstoffen zu wählen. Ferner wird der Einsatz von hell einfärbbaren Bindemitteln gegebenenfalls in Kombination mit hellen Mineralstoffen diskutiert.

Aufgabe der vorliegenden Erfindung ist, einen Straßenbelag in Asphaltbauweise bereitzustellen, der ein hohes Reflexions- und Wärmeeindringvermögen aufweist und gleichzeitig verbesserte thermomechanische Eigenschaften zeigt. Der Straßenbelag soll insbesondere für starke und höchste Verkehrsbelastungen geeignet sein.

Diese Aufgabe wird durch einen Straßenbelag mit den im Anspruch 1 genannten Merkmalen gelöst. Erfindungsgemäß ist vorgesehen, dass mindestens 60 M-% des Mineralstoffs in mindestens einer Asphaltschicht des Straßenbelags, insbesondere einer oberen Deckschicht und/oder einer darunter liegenden Binderschicht, kristalliner Quarz ist. Kristalliner Quarz, der nach ISO 1109 einen $SiO_2$-Gehalt von mindestens 93 % (neben typische Begleitprodukten wie Feldspäten, Schichtsilikaten, Schwermetallen, Eisen- und Manganminerale sowie Gesteinsbruchstücken) und eine Schmelztemperatur von mindestens 1500 °C aufweist, besitzt zum einen eine Wärmeleitfähigkeit, die mit etwa 10,5 W/(mK) um etwa zwei- bis dreimal höher als bei herkömmlichen Mineralstoffen des Straßenbaus liegt. Zusammen mit einer spezifischen Wärmekapazität $c_p$ von etwa 720 J/(kgK) führt die hohe Wärmeleitfähigkeit zu einem hohen Wärmeeindringvermögen. Auf diese Weise gestattet der vorzugsweise in der Deckschicht und der darunter liegenden Binderschicht eingesetzte kristalline Quarz eine sehr gute Wärmeabfuhr der aufgenommenen Wärmeenergie in die jeweiligen darunter liegenden Konstruktionsschichten der Fahrbahn. Gleichzeitig handelt es sich bei kristallinem Quarz um einen sehr hellen Mineralstoff mit einem hohen Reflexionsvermögen. So weist kristalliner Quarz eine etwa drei- bis viermal höhere Albedo als heller Granit auf. Infolge des hohen Reflexionsvermögens wird der aus der Sonneneinstrahlung absorbierte Anteil sehr stark reduziert. Zugleich zeigt kristalliner Quarz ausgezeichnete thermomechanische Eigenschaften. So handelt es sich um eines der härtesten Naturmaterialien (Härte nach Mohs 7, spezifisches Gewicht 2,65 g/cm³). Kristalliner Quarz weist eine trigonaltrapezoedrische Kristallstruktur auf. Ein weiterer Vorteil von kristallinem Quarz wird durch seinen geringen thermischen Ausdehnungskoeffizienten von zirka $1 \times 10^{-6}$ K$^{-1}$ bedingt, der um etwa eine Zehnerpotenz kleiner als derjenige üblicher Straßenbaugesteine wie Basalt, Granit oder Kalkstein ist. Der niedrige thermische Ausdehnungskoeffizient führt zu einer drastischen Reduzierung der thermischen Ausdehnung der entsprechenden Belagsschicht und damit zu einer erheblichen Verminderung thermisch induzierter Spannungen und Rissbildungen. Kristalliner Quarz vereinigt somit vorteilhafte thermodynamische und thermomechanische Eigenschaften, die in der Summe zu einem hochstandfesten, berührungskalten Asphaltstraßenbelag mit hohem Reflexionsvermögen führen.

Die ausgezeichneten mechanischen Eigenschaften von kristallinem Quarz erlauben seinen Einsatz in hohen Massenanteilen. So ist gemäß einer vorteilhaften Ausgestaltung der Erfindung vorgesehen, dass mindestens 90 %, insbesondere mindestens 95 %, vorzugsweise 97 % des in der jeweiligen Asphaltschicht eingesetzten Mineralstoffs kristalliner Quarz ist. Es ist besonders bevorzugt vorgesehen - abgesehen von gegebenenfalls zugesetzten mineralischen Pigmenten (siehe unten) - ausschließlich kristallinen Quarz als Mineralstoff einzusetzen.

Der Quarz wird vorzugsweise in Form von kristallinem gebrochenen Quarz eingesetzt, wobei insbesondere Mischungen aus mindestens einem Quarz-Edelsplitt, mindestens einem Quarz-Edelbrechsand und Quarz-Mehl Einsatz finden, um optimale Korngrößenverteilungen zu erzielen.

Gemäß einer bevorzugten Ausgestaltung der Erfindung weist der Mineralstoff der Deckschicht, insbesondere der kristalline Quarz, eine Korngrößenverteilung von 0 bis 8 mm auf. Hierbei ist besonders bevorzugt vorgesehen, dass der Mineralstoff der Deckschicht (einschließlich eventuell zur Aufhellung beigefügter Pigmente in Pulverform) folgende Korngrößenverteilung aufweist: 70-80 M-%, insbesondere etwa 75 M-%, entsprechen einem Korngrößenbereich von 2 bis 8 mm; 8-18 M-%, insbesondere etwa 13 M-%, entsprechen einem Korngrößenbereich von 0,09 bis 2 mm und 7-17 M-%, insbesondere etwa 12 M-%, entsprechen einem Korngrößenbereich von 0 bis 0,09 mm.

Auf der anderen Seite ist für die Binderschicht eine Korngrößenverteilung des Mineralstoffs von 0 bis 16 mm bevorzugt vorgesehen. Insbesondere weist der Mineralstoff der Binderschicht die folgende Korngrößenverteilung auf: 70-80 M-%, insbesondere etwa 73 M-%, entsprechen einem Korngrößenbereich von 2 bis 16 mm; 15-30 M-%, insbesondere etwa 21 M-%, entsprechen einem Korngrößenbereich von 0,09 bis 2 mm und 3-10 M-%, insbesondere etwa 6 M-%, entsprechen einem Korngrößenbereich von 0 bis 0,09 mm.

Spezielle Beispiele für die Korngrößenverteilungen finden sich in den Ausführungsbeispielen. Die genannten Korngrößenverteilungen für Deck- und Binderschicht sind das Ergebnis vielfältiger Eignungsuntersuchungen im Labor sowie anschließender aufwändiger thermodynamischer und thermomechanischer Modellrechnungen und sind hinsichtlich der Biegefestigkeit optimiert. Sie weichen in einzelnen Punkten von den deutschen Straßenbaubestimmungen (Richtlinien für die Standardisierung des Oberbaus von Verkehrsflächen RStO) ab.

Ein weiterer wichtiger Aspekt der Entwicklungsarbeiten, die zur vorliegenden Erfindung geführt haben, besteht in einer Optimierung der Schichtdicken von Deck- und Binderschicht. Erfindungsgemäß ist vorgesehen, dass die Deckschicht eine mittlere Einbaudicke im Bereich von 2,0 bis 3,0 cm, insbesondere von etwa 2,5 cm, und die Binderschicht eine mittlere Einbaudicke im Bereich von 8,5 bis 11,0 cm, insbesondere von etwa 9,5 cm, aufweist. Dabei wird eine Gesamteinbaudicke beider Schichten von etwa 12 cm angestrebt. Demgegenüber empfiehlt die deutsche RStO für hochbeanspruchte Fahrbahndecken eine Asphaltbinderschicht mit einer Dicke von 8 cm und eine Asphaltdeckschicht mit einer Dicke von 4 cm. Im Allgemeinen gibt die RStO für Binderschichten eine Dicke von 5,0 bis 8,5 cm an. Die erfindungsgemäße Verstärkung der biegesteifen Asphaltbinderschicht zu Lasten der weniger biegesteifen Asphaltdeckschicht führt im Ergebnis zu einer wesentlichen Erhöhung der Biegesteifigkeit der Straßenbefestigung insgesamt gegenüber bekannten Konzepten. Insbesondere in Kombination mit der Verwendung von kristallinem Quarz als Mineralstoff in den Schichten resultiert hierdurch eine sehr hohe Standfestigkeit des Straßenbelags, der ihn für höchste Verkehrsbeanspruchungen geeignet macht.

Ein weiterer wichtiger Aspekt der vorliegenden Erfindung ist in der Optimierung der eingesetzten Bindemittel zu sehen. Dabei ist besonders bevorzugt vorgesehen, dass das in der Binderschicht und/oder der Deckschicht eingesetzte Bindemittel ein polymermodifiziertes Bitumen und/oder ein polymermodifiziertes synthetisches Bindemittel ist. Hierbei handelt es sich um Bindemittel, denen spezielle Polymere zugemengt sind. Bei den so genannten gebrauchsfertigen polymermodifizierten Bitumen wird das Polymer in das Bindemittel in der Raffinerie eingearbeitet. Es ist bevorzugt vorgesehen, dass die Binderschicht als Bindemittel ein polymermodifiziertes Bitumen der Sorte PmB 25 A enthält und die Deckschicht ein PmB der Sorte PmB 45 A oder ein helles einfärbbares Bindemittel (s. u.). Die Bezeichnungen entsprechen den technischen Lieferbedingungen für gebrauchsfertige polymermodifizierte Bitumen in der Ausgabe von 2001 (TL-PmB 2001). Dabei entspricht eine niedrigere Kennzahl in der Bezeichnung einer höheren Steifigkeit. Durch Einsatz polymermodifizierter Bitumen/Bindemittel erhält der erfindungsgemäße Straßenbelag einen hohen Elastizitätsmodul (Resilient Modulus) und eine geringe plastische Verformbarkeit der einzelnen Belagsschichten. Die Standardwerte der Sorten PmB 25 A und PmB 45 A gemäß TL-PmB 2001 sind zusammen mit typischen Werten der in den Beispielen eingesetzten Materialien in den Tabellen 10 und 11 wiedergegeben.

Wird die Deckschicht mit einem dunklen polymermodifizierten Bitumen hergestellt, ist ferner bevorzugt vorgesehen, eine nachträgliche Bindemittelfilm abtragende Oberflächenbehandlung der Deckschicht, beispielsweise durch Sandstrahlen, vorzusehen. Hierdurch wird erreicht, dass das helle Quarzmaterial zur Erhöhung der Helligkeit freigelegt wird. Auf diese Weise kann das Reflexionsvermögen der Deckschicht von 0,05 auf 0,17 erhöht werden.

Gemäß einer noch stärker bevorzugten alternativen Ausführung wird in der Deckschicht ein helles, transparentes, semitransparentes und/oder mit hellen Pigmenten einfärbbares Bindemittel verwendet. Vorzugsweise wird ein semitransparentes polymermodifiziertes Bindemittel für die Deckschicht verwendet, das durch Zusatz von hellen Pigmenten, insbesondere Titandioxid $TiO_2$, eingefärbt wird. Im Zusammenspiel mit dem kristallinen Quarz weist eine solche Deckschicht einen Reflexionskoeffizienten von $\geq$ 0,26 auf. Demgegenüber weisen konventionelle Fahrbahndecken aus Asphalt einen Reflexionskoeffizienten von 0,05 bis 0,10 auf.

Nach einer weiteren bevorzugten Ausgestaltung der Erfindung weist mindestens eine der Asphaltschichten, insbesondere aber die Deckschicht, einen stabilisierenden Zusatz auf, der beispielsweise Cellulosefasern und/oder ein gefülltes Polyolefin sein kann, im Falle der Binderschicht bevorzugt ein gefülltes Polyolefin.

In der Deckschicht wird ein Hohlraumgehalt im Bereich von 1,0 bis 6,0 Vol-%, insbesondere von 2,0 bis 5,0, vorzugsweise im Bereich von 3,0 bis 4,0 Vol-%, angestrebt. Demgegenüber ist ein tendenziell höherer Hohlraumgehalt in der Binderschicht vorteilhaft. Insbesondere wird hier ein Hohlraumgehalt von 2,0 bis 9,0 Vol-%, vorzugsweise von 3,0 bis 8,0, und besonders bevorzugt von 4,0 bis 7,0 Vol-% eingestellt.

Eine besonders bevorzugte Deckschicht gemäß der vorliegenden Erfindung weist folgende Zusammensetzung auf: 6,0 bis 8,0 M-% mindestens eines einfärbbaren, polymermodifizierten Bindemittels, 80 bis 95 M-% kristalliner gebrochener Quarz, 0,3 bis 2,0 M-% mindestens eines stabilisierenden Zusatzes, und 0,1 bis 3,0 M-% (bezogen auf den Mineralstoffgehalt) eines weißen mineralischen Pigments.

Gemäß einer alternativen Ausgestaltung weist die Deckschicht folgende Zusammensetzung auf: 6,0 bis 8,0 M-% eines polymermodifizierten Bindemittels, 80 bis 95 M-% kristalliner gebrochener Quarz, 0,3 bis 2,0 M-% mindestens eines stabilisierenden Zusatzes. In dieser Variante ist die Oberfläche der Deckschicht durch eine Bindemittelfilm abtragende Behandlung bearbeitet.

Eine im Rahmen der vorliegenden Erfindung bevorzugte Binderschicht hat folgende Zusammensetzung: 3,5 bis 6,0 M-% eines polymermodifizierten Bindemittels und 94 bis 96,5 M-% kristalliner gebrochener Quarz.

Für die Korngrößenverteilung des kristallinen gebrochenen Quarzes, die einzusetzenden polymermodifizierten Bindemittel, eventuelle Zusätze in der Deckschicht sowie die Schichtdicken von Deck- und Binderschicht gilt das vorstehend Gesagte entsprechend.

Weitere vorteilhafte Ausgestaltungen der Erfindung sind Gegenstand der übrigen Unteransprüche.

Der Straßenbelag der vorliegenden Erfindung weist mindestens eine Asphaltschicht (12, 14) auf, die eine Mischung aus mindestens einem Mineralstoff (16, 22) und mindestens einem Bindemittel (18, 24) enthält, wobei mindestens 60 M-% des Mineralstoffs (16, 22) der mindestens einen Asphaltschicht (12, 14) kristalliner Quarz ist. Dementsprechend zeigt der Belag Wirkungen, umfassend ein hohes Reflexionsvermögen und eine hohe Wärmeleitfähigkeit und gleichzeitig weist er verbesserte thermomechanische Eigenschaften auf.

Bevorzugte Ausführungsbeispiele der Erfindung werden nachfolgend anhand der zugehörigen Zeichnungen näher erläutert.

Figur 1    zeigt den Aufbau eines erfindungsgemäßen Straßenbelags.
Figur 2    zeigt die Sieblinie des Mineralstoffs der Binderschicht.
Figur 3    zeigt die Sieblinie des Mineralstoffs der Deckschicht.
Figur 4    zeigt einen Graph, der die Ergebnisse eines Temperaturmessversuchs darstellt.
Figur 5    zeigt einen Graph, der die Ergebnisse eines Temperaturmessversuchs darstellt.

Beispiel 1

Beispiel 1 umfasst die Beispiele 1-1 bis 1-3. Da die Verfahrensschritte der Beispiele 1-1 bis 1-3 Übereinstimmungen aufweisen, werden diese Schritte gemeinsam erläutert.

Herstellung einer Asphaltbinderschicht sowie einer Deckschicht aus Splittmastixasphalt

Bei dem erfindungsgemäßen Straßenbelag handelt es sich um eine zweischichtige Fahrbahndecke, die auf einer vorhandenen Tragschicht mittels im Straßenbau üblicher Verfahren und Geräte hergestellt und verlegt wird.

Das Asphaltmischgut für die Deck- und Binderschicht wird in Trocken- und Mischanlagen hergestellt. Dabei werden folgende Arbeitsgänge durchgeführt:

- Vordosieren der Mineralstoffe;
- Trocknen und Erhitzen der Mineralstoffe auf ca. 175 °C;
- Sieben, Zwischenlagern und Dosieren der heißen Mineralstoffe;
- Zugabe des Gesteinsmehls;
- Zugabe stabilisierender Zusätze (Cellulosefasern, PR-Plast.S);
- Vormischen der Mineralstoffe mit den stabilisierenden Zusätzen in Hauptmischtrommel;
- Dosierung und Vormischen des auf ca. 175 °C erwärmten Bindemittels und Titandioxids (nur bei heller Deckschicht) in separater Mischtrommel;
- Zugeben des erwärmten und gegebenenfalls vorgemischten Bindemittels in Hauptmischtrommel;
- Mischen und gegebenenfalls
- Zwischenlagern des Mischguts im Silo.

Die installierte Mischleistung liegt im Allgemeinen zwischen 120 und 300 t/h. Die bereitzustellende Transportkapazität muss auf die Leistung der Mischanlage, die Einbauleistung des Fertigers, die Transportentfernung und die Verkehrsverhältnisse abgestimmt werden. Das Mischgut sollte abgedeckt und möglichst in wärmegedämmten Behältern transportiert werden. Das Mischgut sollte grundsätzlich mit Straßenfertigern eingebaut werden. Eine hinreichend hohe Einbautemperatur ist die Voraussetzung für die einwandfreie Verdichtung und einen guten Schichtenverbund. Die Verdichtung beginnt mit der Vorverdichtung durch die Einbaubohle des Fertigers. Für die Walzverdichtung können statische Glattradwalzen, Vibrationswalzen und/oder Gummiradwalzen eingesetzt werden.

Die Zusammensetzung und einige Asphalteigenschaften der Binderschicht finden sich in Tabelle 1 (Beispiel 1-1). Die Zusammensetzung und Materialeigenschaften eines Splittmastixasphalts mit hell eingefärbtem Bindemittel sind in Tabelle 2 (Beispiel 1-2) aufgelistet. Zusammensetzung und Eigenschaften eines alternativen Splittmastixasphalts mit dunklem Bindemittel, der mit materialabtragender Oberflächenbehandlung erhalten wurde, stellt Tabelle 3 (Beispiel 1-3) zusammen.

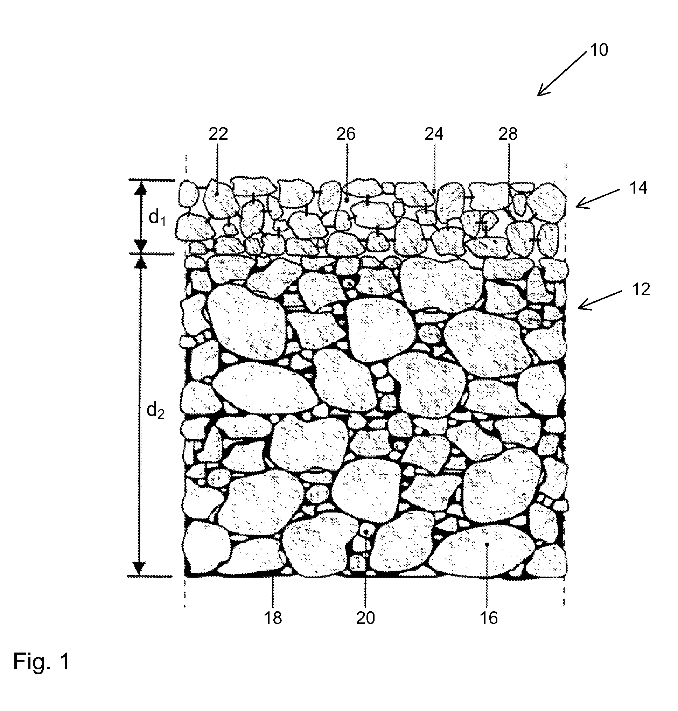

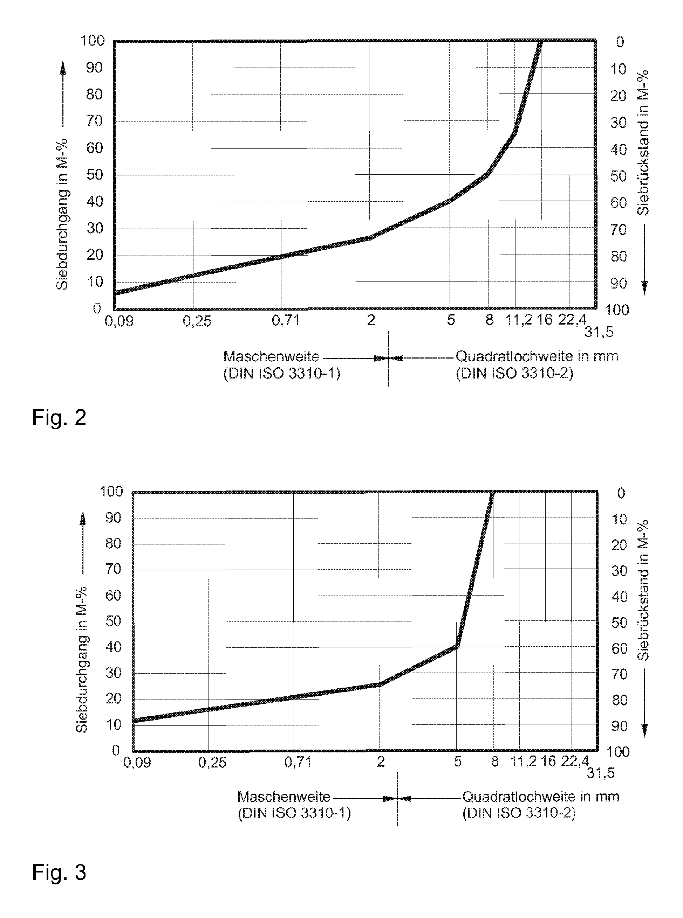

Figur 1 zeigt schematisch den Aufbau eines erfindungsgemäßen Straßenbelages als Querschnitt. Der insgesamt mit 10 bezeichnete Straßenbelag umfasst eine Asphaltbinderschicht 12 mit einer Einbaudicke $d_2$ von durchschnittlich 9,5 cm sowie eine darüber liegende Deckschicht 14 aus Splittmastixasphalt mit einer Einbaudicke $d_1$ von 2,0 bis 3,0 cm. Der in der Binderschicht 12 verwendete Mineralstoff 16 ist ausschließlich kristalliner gebrochener Quarz mit einer Korngrößenverteilung, die sich im Bereich von 0 bis 16 mm erstreckt. Die Sieblinie des Mineralstoffs 16 der Binderschicht 12 ist in Figur 2 dargestellt. Das in der Binderschicht 12 verwendete Bindemittel 18 ist ein polymermodifiziertes Bitumen der Sorte PmB 25 A mit der Handelsbezeichnung Caribit 25 (Firma Deutsche Shell GmbH) (siehe Tabelle 10). Es hat bisher in das deutsche Regelwerk für Fahrbahndecken aus Asphalt keinen Eingang gefunden. Die Hohlräume 20 der Binderschicht 12 nehmen zwischen 3,0 und 8,0 Vol-% in Anspruch.

Die dargestellte Deckschicht 14 (gemäß Tabelle 2) weist als Mineralstoff 22 ebenfalls kristallinen gebrochenen Quarz auf. Die Korngrößenverteilung des kristallinen Quarzes reicht von 0 bis 8 mm. Abgesehen von 2,5 M-% Titandioxid, das zur Einfärbung des semitransparenten Bindemittels 24 zugesetzt wird, besteht auch der Mineralstoff 22 der Deckschicht 14 ausschließlich aus kristallinem gebrochenen Quarz. Bei dem Bindemittel 24 der hier dargestellten Deckschicht 14 handelt es sich um ein polymermodifiziertes, einfärbbares und im Wesentlichen farbloses Bindemittel der Handelsbezeichnung Mexphalte CP2 (Deutsche Shell GmbH) (s. Tabelle 12). Durch die Einfärbung mit $TiO_2$ erhält es eine weiße Färbung, die zusammen mit dem hellen Quarz 22 einen sehr hellen Asphalt mit hohem Reflexionsvermögen ergibt. Der Volumenanteil der Hohlräume 26 in der Deckschicht 14 beträgt 2,0 bis 4,0 Vol-%. Angedeutet in Figur 1 ist ferner ein stabilisierender Zusatz 26, der ein gefülltes thermoplastisches Polyolefin der Handelsbezeichnung PR-Plast.S (Firma Produit Route Industrie, Genlis) (s. Tabelle 13) ist. Er wird als schwarzes, linsenförmiges Granulat mit der Körnung von 4 mm hergestellt und dem auf Verarbeitungstemperatur erwärmten Mineralstoff zugemischt. Im Asphalt führt er zu einer Punktverklebung der Mineralstoffkörner 22. Durch diese Stützstellen wird eine hohe innere Reibung des Mineralstoffgemisches bei gleichzeitig gutem Kälteverhalten der Asphaltschicht erreicht. Nach einer nicht dargestellten Variante enthält auch die Binderschicht (12) einen stabilisierenden Zusatz von PR-Plast.S.

Tabelle 1:

| Asphaltbinderschicht 0/16 S (Beispiel 1-1) | | | | | |
|---|---|---|---|---|---|
| <u>allgemeine</u> <u>Angaben</u> | Besondere Merkmale | hochstandfeste Asphaltbinderschicht für besondere Beanspruchungen | | | |
| | Bauklasse | SV, I-III nach deutscher RStO 01 | | | |
| | Einbaudicke | 9,0-10,0 cm | | | |
| <u>Mischgutzusammensetzung</u> | Mineralstoffe | Art | kristalliner gebrochener Quarz (Fa. Mitteldeutsche Hartstein-, Kies- und Mischwerke Naumburg) | | |
| | | Zusammensetzung | Quarz-Edelsplitt | 11/16 mm | 35,0 M-% |
| | | | Quarz-Edelsplitt | 8/11 mm | 15,0 M-% |
| | | | Quarz-Edelsplitt | 5/8 mm | 9,0 M-% |
| | | | Quarz-Edelsplitt | 2/5 mm | 14,0 M-% |
| | | | Quarz-Edelbrechsand | 0,71/2 mm | 7,0 M-% |
| | | | Quarz-Edelbrechsand | 0,25/0,71 mm | 8,0 M-% |
| | | | Quarz-Edelbrechsand | 0,09/0,25 mm | 6,0 M-% |
| | | | Quarz-Steinmehl | < 0,09 mm | 6,0 M-% |
| | Bindemittel | Art | Polymermodifiziertes Bindemittel (Carabit 25, Deutsche Shell GmbH) | | |
| | | Gehalt | | | 4,2-5,5 M-% [#] |

(fortgesetzt)

| Asphaltbinderschicht 0/16 S (Beispiel 1-1) | | | | |
|---|---|---|---|---|
| <u>Asphalteigenschaften</u> | allgemein | Verdichtungsgrad | | ≥ 97,0 % |
| | | Hohlraumgehalt | | 4,0-7,0 Vol-% |
| | | Raumdichte | | ≥ 2,240 g/cm$^3$ |
| | mechanisch | Spaltzugfestigkeit | bei 20 °C | ≥ 1,9 N/mm$^2$ |
| | | Resilient Modulus | bei 40 °C | ≥ 1300,0 N/mm$^2$ |
| | | | bei 55 °C | ≥ 540,0 N/mm$^2$ |
| | | Poissonzahl | bei 40 °C | ca. 0,1 |
| | | | bei 55 °C | ca. 0,1 |
| | thermisch | Wärmeleitfähigkeit | | ≥ 3,0 W/(m·K) |
| | | Spezifische Wärmekapazität | | 950,0 J/(kg·K) |
| # bezogen auf Gesamteinwaage | | | | |

Tabelle 2:

| Asphaltdeckschicht aus Splittmastrixasphalt SMA 0/8 S (Beispiel 2) | | | | | |
|---|---|---|---|---|---|
| <u>allgemeine Angaben</u> | Besonderheit | Einsatz von Cellulosefasern und Polyolefinen als stabilisierende Zusätze, hell eingefärbtes Bindemittel | | | |
| | Bauklasse | SV, I-III nach deutscher RStO 01 | | | |
| | Einbaudicke | 2,0-3,0 cm | | | |
| <u>Mischgutzusammensetzung</u> | Mineralstoffe | Art | kristalliner gebrochener Quarz (Fa. Mitteldeutsche Hartstein-, Kies- und Mischwerke Naumburg) | | |
| | | Zusammensetzung | Quarz-Edelsplitt | 5/8 mm | 60,0 M-% |
| | | | Quarz-Edelsplitt | 2/5 mm | 15,0 M-% |
| | | | Quarz-Edelbrechsand | 0,71/2 mm | 4,0 M-% |
| | | | Quarz-Edelbrechsand | 0,25/0,71 mm | 4,0 M-% |
| | | | Quarz-Edelbrechsand | 0,09/0,25 mm | 5,0 M-% |
| | | | Quarz-Steinmehl | < 0,09 mm | 9,5 M-% |
| | | | $TiO_2$ | < 0,09 mm | 2,5 M-% |
| | Bindemittel | Art | Polymermodifiziertes Bindemittel (Mexphalte CP2, Deutsche Shell GmbH) | | |
| | | Gehalt | | | 6,0-7,0 M-%[#] |
| | stabilisierende Zusätze | 0,3 M-% Cellulosefasern (Technocel)[#] | | | |
| | | 0,6 M-% gefülltes Polyolefin (PR-Plast.S, Fa. Produit Route Industrie, Genlis)[§] | | | |

(fortgesetzt)

| Asphaltdeckschicht aus Splittmastrixasphalt SMA 0/8 S (Beispiel 2) | | | | |
|---|---|---|---|---|
| Asphalteigenschaften | allgemein | Verdichtungsgrad | | $\geq$ 97,0 % |
| | | Hohlraumgehalt | | 3,0-4,0 Vol-% |
| | | Raumdichte | | $\geq$ 2,280 g/cm$^3$ |
| | mechanisch | Spaltzugfestigkeit | bei 20 °C | $\geq$ 2,0 N/mm$^2$ |
| | | Resilient Modulus | bei 40 °C | $\geq$ 1050,0 N/mm$^2$ |
| | | | bei 55 °C | $\geq$ 280,0 N/mm$^2$ |
| | | Poissonzahl | bei 40 °C | ca. 0,4 |
| | | | bei 55 °C | ca. 0,3 |
| | thermisch | Reflexionsvermögen | | $\geq$ 26 % |
| | | Wärmeleitfähigkeit | | $\geq$ 2,80 W/(m·K) |
| | | Spezifische Wärmekapazität | | 750,0 J/(kg·K) |
| [#] bezogen auf Gesamteinwaage,<br>[§] bezogen auf Gesamteinwaage abzüglich Bindemittel- und Cellulosefasergehalt | | | | |

Tabelle 3:

| Asphaltdeckschicht aus Splittmastrixasphalt SMA 0/8 S (Beispiel 1-3) | | | | | |
|---|---|---|---|---|---|
| allgemeine Angaben | Besonderheit | Einsatz von Cellulosefasern und Polyolefinen als stabilisierende Zusätze; abtragende Oberflächenbehandlung zur Aufhellung | | | |
| | Bauklasse | SV, I-III nach RStO 01 | | | |
| | Einbaudicke | 2,0-3,0 cm | | | |
| Mischgutzusammensetzung | Mineralstoffe | Art | kristalliner gebrochener Quarz (Fa. Mitteldeutsche Hartstein-, Kies- und Mischwerke Naumburg) | | |
| | | Zusammensetzung | Quarz-Edelsplitt | 5/8 mm | 60,0k M-% |
| | | | Quarz-Edelsplitt | 2/5 mm | 15,0 M-% |
| | | | Quarz-Edelbrechsand | 0,71/2 mm | 4,0 M-% |
| | | | Quarz-Edelbrechsand | 0,25/0,71 mm | 4,0 M-% |
| | | | Quarz-Edelbrechsand | 0,09/0,25 mm | 5,0 M-% |
| | | | Quarz-Steinmehl | < 0,09 mm | 12,0 M-% |
| | Bindemittel | Art | Polymermodifiziertes Bindemittel (Caribit 45, Deutsche Shell GmbH) | | |
| | | Gehalt | 6,0-7,0 M-% [#] | | |
| | stabilisierende Zusätze | 0,3 M-% Cellulosefasern (Technocel)[#] | | | |
| | | 0,6 M-% gefülltes Polyolefin (PR-Plast.S, Fa. Produit Route Industrie, Genlis)[§] | | | |

(fortgesetzt)

| Asphaltdeckschicht aus Splittmastrixasphalt SMA 0/8 S (Beispiel 1-3) | | | | |
|---|---|---|---|---|
| Asphalteigenschaften | allgemein | Verdichtungsgrad | | ≥ 97,0 % |
| | | Hohlraumgehalt | | 3,0-4,0 Vol-% |
| | | Raumdichte | | ≥ 2,240 g/cm$^3$ |
| | mechanisch | Spaltzugfestigkeit | bei 20 °C | ≥ 2,4 N/mm$^2$ |
| | | Resilient Modulus | bei 40 °C | ≥ 1400,0 N/mm$^2$ |
| | | | bei 55 °C | ≥ 390,0 N/mm$^2$ |
| | | Poissonzahl | bei 40 °C | ca. 0,1 |
| | | | bei 55 °C | ca. 0,1 |
| | thermisch | Reflexionsvermögen | | ≥ 17 % |
| | | Wärmeleitfähigkeit | | ≥ 2,80 W/(m·K) |
| | | Spezifische Wärmekapazität | | 750,0 J/(kg·K) |
| [#] bezogen auf Gesamteinwaage, [§] bezogen auf Gesamteinwaage abzüglich Bindemittel- und Cellulosefasergehalt | | | | |

Beispiel 2

Nachfolgend werden weitere Ausführungsbeispiele erläutert. Beispiel 2 beinhaltet die Beispiele 2-1 bis 2-3. In den Tabellen 4 bis 6 sind die Zusammensetzungen und Materialeigenschaften zusammengefasst. Im Unterschied zu den Tabellen 1 bis 3 sind in den Tabellen 4 bis 6 die Massenanteile M-% jeder Komponente bezogen auf die Gesamtmasse aller Mischungskomponenten (Mineralstoffe, Bindemittel und stabilisierende Zusätze) berechnet.

Beispiel 2-1

Tabelle 4 zeigt eine Zusammenstellung der Zusammensetzung und Materialeigenschaften einer Asphaltbinderschicht. In der Tabelle bedeutet Microsil (Handelsname: Deutsche Euroquarz GmbH, Deutschland) kristallines Quarz-Steinmehl enthaltend 99,5 % $SiO_2$ (Siliziumdioxid) (gezeigt in Tabelle 14). Quarz-Brechsand und Quarz-Sand sind ebenfalls kristalliner Quarz. Quarz-Brechsand und Quarz-Sand wurden in einer Mine gewonnen und entsprechend ihrer Korngrößen getrennt und in einer Anlage weiterverarbeitet. Microsil wurde in einer Firma verarbeitet und unter Berücksichtigung der Inhaltsstoffe ausgewählt.

Tabelle 4:

| Asphaltbinderschicht (Beispiel 2-1) | | | | | |
|---|---|---|---|---|---|
| Mischgutzusammensetzung | Mineralstoffe | Art | kristalliner gebrochener Quarz | | |
| | | Zusammensetzung | Quarz-Brechsand | 11,2/16,0 mm | 33,3 M-% |
| | | | | 8,0/11,2 mm | 14,3 M-% |
| | | | | 4,0/8,0 mm | 9,5 M-% |
| | | | | 2,0/4,0 mm | 12,4 M-% |
| | | | Quarz-Sand | 1,0/2,0 mm | 6,7 M-% |
| | | | | 0,50/1,0 mm | 5,3 M-% |
| | | | | 0,25/0,50 mm | 2,3 M-% |
| | | | | 0,125/0,25 mm | 3,0 M-% |
| | | | Microsil type3 (Quarz-Steinmehl) | 40/300 μm | 8,4 M-% |
| | Bindemittel | Art | Polymermodifiziertes Bindemittel (Caribit 25, Deutsche Shell GmbH) | | |
| | | Gehalt | 4,8 M-% | | |
| | | | | | |
| Asphalteigenschaften | mechanisch | Spaltzugfestigkeit | 20°C | | 2,3 N/mm² |
| | | Resilient Modulus | 40°C | | 1600 N/mm² |
| | | | 55°C | | 600 N/mm² |
| | thermisch | Wärmeleitfähigkeit | | | 3,5 W/(m·K) |
| | | Spezifische Wärmekapazität | | | 760 J/(kg·K) |

Die Binderschicht gemäß Tabelle 4 wurde durch den folgenden Prozess hergestellt.

1. Die Mineralstoffe (Quarz-Brechsand, Quarz-Sand, Microsil) wurden vorerhitzt (bei 170 °C für mindestens 12 Stunden).
2. Das Bindemittel (Caribit 25) wurde vorerhitzt (bei 170 °C für weniger als 4 Stunden).

3. Dann wurde

    (a) die Temperatur der eingesetzten Materialien (Mineralstoffe und Bindemittel) beibehalten,
    (b) die Mineralstoffe für 3 Minuten mit einem Mischer vorgemischt,
    (c) das Bindemittel zugegeben, und
    (d) für 5 Minuten gerührt.

4. Die unter 3. erhaltene Asphaltmischung wurde erneut auf 175 °C für 1 Stunde erwärmt.
5. Marshal-Proben und eine Gussdecke wurden hergestellt.
6. Beide Seiten der Marshal-Proben wurden 75 mal mit einem Marshal-Hammer verdichtet.
7. Die Gussdecke wurde auf die gleiche Weise verdichtet.
Durch das vorstehend beschriebene Verfahren wurde eine Asphaltbinderschicht erhalten.

Beispiel 2-2

Tabelle 5 zeigt eine Zusammenstellung der Zusammensetzung und Materialeigenschaften einer dunklen Asphaltdeckschicht.

Tabelle 5:

| Dunkle Asphaltdeckschicht (Beispiel 2-2) | | | | | |
|---|---|---|---|---|---|
| Mischgutzusammensetzung | Mineralstoffe | Art | kristalliner gebrochener Quarz | | |
| | | Zusammensetzung | Quarz-Brechsand | 5,0/8,0 mm | 56,9 M-% |
| | | | | 2,0/5,0 mm | 14,3 M-% |
| | | | Quarz-Sand | 1,0/2,0 mm | 3,8 M-% |
| | | | | 0,50/1,0 mm | 1,9 M-% |
| | | | | 0,25/0,50 mm | 2,4 M-% |
| | | | Microsil type3 (Quarz-Steinmehl) | 40/300 μm | 13,3 M-% |
| | Bindemittel | Art | Polymermodifiziertes Bindemittel (Caribit 45, Deutsche Shell GmbH) | | |
| | | Gehalt | 6,5 M-% | | |
| | stabilisierende Zusätze | 0,3 M-% Cellulosefasern (Technocel, Fa. CFF, Deutschland) | | | |
| | | 0,6 M-% gefüllte Polyolefine (PR-Plast.S) | | | |
| Asphalteigenschaften | mechanisch | Spaltzugfestigkeit | 20°C | 2,7 N/mm$^2$ | |
| | | Resilient Modulus | 40°C | 1800,0 N/mm$^2$ | |
| | | | 55°C | 550,0 N/mm$^2$ | |
| | thermisch | Reflexionsvermögen | 10 % | | |
| | | Wärmeleitfähigkeit | 3,2 W/(m·K) | | |
| | | Spezifische Wärmekapazität | 940 J/(kg·K) | | |

Die dunkle Asphaltdeckschicht gemäß Tabelle 5 wurde entsprechend dem folgenden Verfahren erhalten.

1. Die Mineralstoffe (Quarz-Brechsand, Quarz-Sand, Microsil) wurden vorerhitzt (bei 175 °C für mindestens 12 Stunden).

2. Das Bindemittel (Caribit 45) wurde vorerhitzt (bei 175 °C für weniger als 4 Stunden).

3. Der stabilisierende Zusatz (Technocel) sowie der stabilisierende Zusatz (PR-Plast.S) wurden auf Raumtemperatur bei 23 °C vortemperiert.

4. Der stabilisierende Zusatz (Technocel) wurde zu dem Bindemittel (Caribit 45) zugegeben und vorgemischt.

5. Die Mischung (Bindemittel (Caribit 45) + stabilisierender Zusatz (Technocel)) wurde erneut auf 175 °C für weniger als 12 Stunden erhitzt.

6. Der stabilisierende Zusatz (PR-Plast.S) wurde zu den obigen Mineralstoffen zugefügt und vorgemischt.

7. Die Mischung (Bindemittel (Caribit 45) + stabilisierender Zusatz (Technocel)) wurde zu den Mineralstoffen (Quarz-Brechsand, Quarz-Sand, Microsil + stabilisierender Zusatz (PR-Plast.S)) zugefügt.

8. Diese Mischung wurde von Hand 5 Minuten gerührt.

9. Die Asphaltmischung (Quarz-Brechsand, Quarz-Sand, Microsil + stabilisierender Zusatz (PR-Plast.S) + Bindemittel (Caribit 45) + stabilisierender Zusatz (Technocel)) wurde erneut auf 175 °C für 1 Stunde erhitzt.

10. Marshal-Proben und eine Gussdecke wurden hergestellt (während dieser Herstellung lag die Temperatur der Mischung oberhalb von 160 °C).

11. Beide Seiten der Marshal-Proben wurden 75 mal Bearbeitung mit einem Marschal-Hammer verdichtet (nach der Verdichtung lag die Temperatur oberhalb von 110 °C).

12. Basierend auf der Schüttdichte wurde die Gussplatte verdichtet.

Durch das vorstehend beschriebene Verfahren wurde eine dunkle Asphaltdeckschicht erhalten. Das Bindemittel (PR-Plast.S) ist ein dunkles Bindemittel (s. Tabelle 13). Daher ist entsprechend diesem Beispiel zu empfehlen, einen Film des dunklen Bindemittels durch eine materialabtragende Oberflächenbehandlung der hellen Mineralstoffe zu entfernen. Auf diese Weise wird die Reflektivität verbessert.

Beispiel 2-3

Tabelle 6 zeigt die Zusammensetzung einer hellen Asphaltdeckschicht und die Materialeigenschaften.

Tabelle 6:

| Helle Asphaltdeckschicht (Beispiel 2-3) | | | | | |
|---|---|---|---|---|---|
| Mischgutzusammensetzung | Mineralstoffe | Art | kristalliner gebrochener Quarz | | |
| | | Zusammensetzung | Quarz-Brechsand | 5,0/8,0 mm | 55,6 M-% |
| | | | | 2,0/5,0 mm | 13,9 M-% |
| | | | Quarz-Sand | 1,0/2,0 mm | 3,7 M-% |
| | | | | 0,50/1,0 mm | 1,8 M-% |
| | | | | 0,25/0,50 mm | 2,3 M-% |
| | | | Microsil type3 (Quarz-Steinmehl) | 40/300 $\mu$m | 13,0 M-% |
| | | | TiO$_2$ | <0,09 mm | 2,3 M-% |
| | Bindemittel | Art | Polymermodifiziertes Bindemittel (Mexphalte CP2, Deutsche Shell GmbH) | | |
| | | Gehalt | | | 6,5 M-% |
| | stabilisierende Zusätze | 0.3 M-% Cellulosefasern (Technocel, Fa. CFF, Germany) | | | |
| | | 0.6M-% gefüllte Polyolefine (PR-Plast.S) | | | |

(fortgesetzt)

| Helle Asphaltdeckschicht (Beispiel 2-3) | | | | |
|---|---|---|---|---|
| Asphalteigenschaften | mechanisch | Spaltzugfestigkeit | 20°C | 2,2 N/mm$^2$ |
| | | Resilient Modulus | 40°C | 1200 N/mm$^2$ |
| | | | 55°C | 260 N/mm$^2$ |
| | thermisch | Reflexionsvermögen | | 23 % |
| | | Wärmeleitfähigkeit | | 3,2 W/(m·K) |
| | | Spezifische Wärmekapazität | | 940 J/(kg·K) |

Die helle Asphaltdeckschicht wurde durch folgendes Verfahren hergestellt.

1. Die Mineralstoffe (Quarz-Brechsand, Quarz-Sand, Microsil) wurden vorerhitzt (bei 175 °C für mindestens 12 Stunden).
2. Das Bindemittel (Mexphalte CP2) wurde vorerhitzt (bei 170 °C für weniger als 4 Stunden).
3. Das helle Pigment (Titandioxid) und der stabilisierende Zusatz (Technocel) wurden auf Raumtemperatur von 23 °C vortemperiert.
4. Das helle Pigment (Titandioxid) wurde dem Bindemittel (Mexphalte CP2) zugesetzt und vorgemischt.
5. Die Mischung wurde erneut auf 175 °C für 5 Stunden erwärmt.
6. Der stabilisierende Zusatz (Technocel) wurde zu dem Bindemittel ((Mexphalte CP2) + helles Pigment (Titaniumdioxid)) zugegeben und vorgemischt.
7. Die hergestellte Bindermischung (Bindemittel (Mexphalte CP2) + helles Pigment (Titandioxid) + stabilisierender Zusatz (Technocel)) wurde erneut auf 175 °C für weniger als zwei Stunden erwärmt.
8. Der stabilisierende Zusatz (PR-Plast.S) wurde zu den Mineralstoffen (Quarz-Brechsand, Quarz-Sand, Microsil) zugegeben und die Mischung wurde vorerhitzt.
9. Die hergestellte Bindermischung (Bindemittel (Mexphalte CP2) + helles Pigment (Titandioxid) + stabilisierender Zusatz (Technocel)) wurde den Mineralstoffen (Quarz-Brechsand, Quarz-Sand, Microsil + stabilisierender Zusatz (PR-Plast.S)) zugefügt.
10. Die Mischung wurde von Hand 5 für Minuten gerührt.
11. Die Asphaltmischung (Mineralstoffe (Quarz-Brechsand, Quarz-Sand, Microsil + stabilisierender Zusatz (PR-Plast.S) + Bindemittel (Mexphalte CP2) + helles Pigment (Titandioxid) + stabilisierender Zusatz (Technocel)) wurde erneut auf 175 °C für 1 Stunde erhitzt.
12. Marshal-Proben und eine Gussplatte wurden hergestellt (während dieser Herstellung lag die Temperatur der Mischung oberhalb von 160 °C).
13. Beide Seiten der Marshal-Proben wurden 75 mal mit einem Marshal-Hammer verdichtet (Nach der Verdichtung lag die Temperatur oberhalb von 110 °C).
14. Basierend auf der Schüttdichte wurde die Gussplatte verdichtet.
Durch das vorstehend beschriebene Verfahren wurde eine helle Asphaltdeckschicht erhalten.

Auswertung

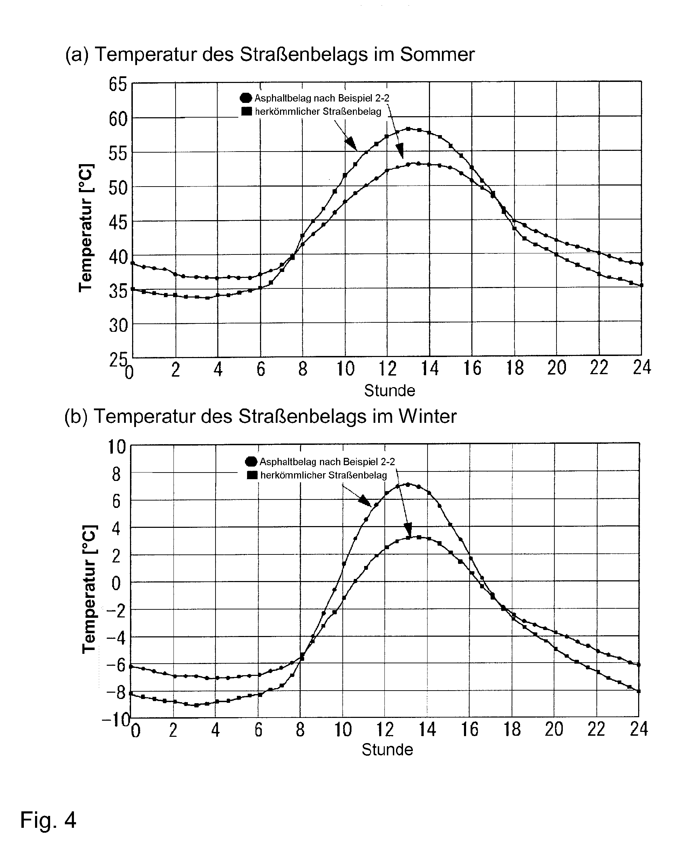

Die Temperaturen der Fahrbahnoberfläche des Asphaltbelages nach Beispiel 2-2 und eines herkömmlichen Asphaltstraßenbelages wurden verglichen. Die Ergebnisse sind in den Figuren 4a und b dargestellt. Figur 4a zeigt die Temperaturänderung im Sommer und Figur 4b zeigt die Temperaturänderung im Winter. In den Figuren bezeichnen die Symbole ● Temperaturen der Fahrbahnoberfläche des Asphaltbelages nach Beispiel 2-2, während die Symbole ■ die Temperaturen der Fahrbahnoberfläche des herkömmlichen Asphaltbelages bezeichnen. Wie aus den Figuren ersichtlich ist, reduziert der Asphaltbelag gemäß Beispiel 2-2 den Temperaturanstieg an den höchsten Temperaturen im Sommer um etwa 5 °C und den Temperaturabfall an den niedrigsten Temperaturen im Winter um etwa 4 °C. Zudem ist die Temperaturänderung während eines Tages entsprechend der Temperaturdifferenz des Asphaltbelages nach Beispiel 2-2 geringer als die des konventionellen Asphaltbelages. Dementsprechend wird der erfindungsgemäße Straßenbelag weniger durch Temperaturänderungen belastet als der konventionelle Asphaltbelag, so dass er zur Entgegenwirkung des Heat-Island-Phänomens im Sommer geeignet ist genauso wie zum Schutz der Straße vor Frost im Winter.

Beispiel 3

Beispiel 3 beinhaltet die Beispiele 3-1 bis 3-3. In den Tabellen 7 bis 9 sind die Zusammensetzungen und die Materialeigenschaften zusammengefasst. Ferner bedeutet in den Tabellen 7 bis 9 "Gesamteinwaage" die gesamte Einwaage des Mineralstoffs (außer $TiO_2$) analog den Tabellen 1-3. Dementsprechend sind die Massen des Bindemittels, der stabilisierenden Zusätze und von $TiO_2$ als Massenanteile M-% bezogen auf 100 M-% der Mineralstoffe dargestellt.

Beispiel 3-1

Tabelle 7 zeigt eine Zusammenstellung der Zusammensetzung und der Materialeigenschaften der Asphaltbinderschicht. In der Tabelle ist Silica (=Kieselsäure) als Mineralstoff aufgeführt, welches 93 M-% oder mehr Siliziumdioxid ($SiO_2$) enthält. Silica wird in Minen abgebaut und in einer Fabrikanlage entsprechend der Korngröße separiert und verarbeitet.

Tabelle 7:

| Asphaltbinderschicht (Beispiel 3-1) | | | | | |
|---|---|---|---|---|---|
| Mischgutzusammensetzung | Mineralstoffe | Art | Silica | | |
| | | Zusammensetzung | Silica-Brechsand | 13,0/20,0 mm | 25,0 M-% |
| | | | | 5,0/13,0 mm | 32,0 M-% |
| | | | | 2,5/5,0 mm | 14,0 M-% |
| | | | Silica-Brechsand und Silica-Sand | 0,0/2,5 mm | 23,0 M-% |
| | | | Silica-Steinmehl | 0,0/2,5 mm | 6,0 M-% |
| | Bindemittel | Art | Polymermodifiziertes Bindemittel (Caribit 25, Deutsche Shell GmbH) | | |
| | | Gehalt | # 5.0 M-% | | |
| | stabilisierende Zusätze | 0,6 M-% gefüllte Polyolefine (PR-Plast S) # | | | |
| # bezogen auf die Gesamteinwaage | | | | | |

Die Asphaltbinderschicht gemäß Tabelle 7 wurde nach dem folgenden Verfahren hergestellt.

1. Die Mineralstoffe (Silica-Brechsand, Silica-Sand, Silica-Steinmehl) wurden vorerhitzt (bei 170 °C für mindestens 12 Stunden).
2. Das Bindemittel (Caribit 25) wurde vorerhitzt (bei 170 °C für weniger als 4 Stunden).
3. Dann wurde

   a) die Temperatur der eingesetzten Materialien (Mineralstoffe und Bindemittel) beibehalten,
   b) die Mineralstoffe für 3 Minuten mit einem Mischer vorgemischt,
   c) das Bindemittel zugegeben, und
   d) für 5 Minuten gerührt.

4. Die unter 3. erhaltene Asphaltmischung wurde erneut auf 175 °C für 1 Stunde erwärmt.
5. Marshal-Proben und eine Gussdecke wurden hergestellt.
6. Beide Seiten der Marshal-Proben wurden 75 mal mit einem Marshal-Hammer verdichtet.
7. Die Gussdecke wurde auf die gleiche Weise verdichtet.
Durch das vorstehend beschriebene Verfahren wurde eine Asphaltbinderschicht erhalten.

Beispiel 3-2

Tabelle 8 zeigt eine Zusammenstellung der Zusammensetzung und Materialeigenschaften einer dunklen Asphaltdeckschicht.

Tabelle 8:

| Dunkle Asphaltdeckschicht (Beispiel 3-2) | | | | | |
|---|---|---|---|---|---|
| Mischgutzusammensetzung | Mineralstoffe | Art | Silica | | |
| | | Zusammensetzung | Silica-Brechsand | 5,0/8,0 mm | 64,0 M-% |
| | | | | 2,5/5,0 mm | 13,0 M-% |
| | | | Silica-Brechsand und Silica-Sand | 0,0/2,5 mm | 9,0 M-% |
| | | | Silica-Steinmehl | 0,0/2,5 mm | 14,0 M-% |
| | Bindemittel | Art | Polymermodifiziertes Bindemittel (Caribit 45, Deutsche Shell, Deutschland) | | |
| | | Gehalt | # 6,5 M-% | | |
| | stabilisierende Zusätze | 0,3 M-% Cellulosefasern (SMA abocel, Clariant Polymer, Deutschland) # | | | |
| | | 0,6 M-% gefüllte Polyolefine (PR-Plast.S) # | | | |
| # bezogen auf die Gesamteinwaage | | | | | |

Die dunkle Asphaltdeckschicht gemäß Tabelle 8 wurde entsprechend dem folgenden Verfahren erhalten. Hier wurde Silica als Mineralstoff eingesetzt, dieses Silica enthält mindestens 93 M-% Siliziumdioxid (SiO$_2$). Silica wird in Minen abgebaut und entsprechend der Korngrößen in Fabrikanlagen separiert und verarbeitet.

1. Die Mineralstoffe (Silica-Brechsand, Silica-Sand, Silica-Steinmehl) wurden vorerhitzt (bei 170 °C für mindestens 12 Stunden).
2. Das Bindemittel (Caribit 25) wurde vorerhitzt (bei 170 °C für weniger als 4 Stunden).
3. Der stabilisierende Zusatz (SMA Abocel) sowie der stabilisierende Zusatz (PR-Plast.S) wurden auf Raumtemperatur bei 23 °C vortemperiert.
4. Der stabilisierende Zusatz (SMA Abocel) wurde zu dem Bindemittel (Caribit 45) zugegeben und vorgemischt.
5. Die Mischung (Bindemittel (Caribit 45) + stabilisierender Zusatz (SMA Abocel)) wurde erneut auf 175 °C für weniger als 2 Stunden erhitzt.
6. Der stabilisierende Zusatz (PR-Plast.S) wurde den Mineralstoffen zugefügt und vorgemischt.
7. Die Mischung (Bindemittel (Caribit 45) + stabilisierender Zusatz (SMA Abocel)) wurde zu den Mineralstoffen (Silica-Brechsand, Silica-Sand, Silica-Steinmehl + stabilisierender Zusatz (PR-Plast.S)) zugefügt.
8. Die Mischung wurde von Hand für 5 Minuten gerührt.
9. Die Asphaltmischung (Silica-Brechsand, Silica-Sand, Silica-Steinmehl + stabilisierender Zusatz (PR-Plast.S) + Bindemittel (Carbit 45) + stabilisierender Zusatz (SMA Abocel)) wurde erneut auf 175 °C für weniger als 1 Stunde erhitzt.
10. Marshal-Proben und eine Gussdecke wurden hergestellt (während dieser Herstellung lag die Temperatur oberhalb von 160 °C).
11. Beide Seiten der Marshal-Proben wurden 75 mal mit einem Marshal-Hammer verdichtet (nach der Verdichtung lag die Temperatur oberhalb von 110 °C).
12. Basierend auf der Schüttdichte wurde die Gussplatte verdichtet.

Durch das vorstehend beschriebene Verfahren wurde eine dunkler Asphaltdeckschicht erhalten. Das Bindemittel (PR-Plast.S) ist ein dunkles Bindemittel (siehe Tabelle 13). Daher können die hellen Mineralstoffe sandgestrahlt werden, um den dunklen Bindemittelfilm zu entfernen und das Reflexionsvermögen zu erhöhen.

Beispiel 3-3

Tabelle 9 zeigt eine Zusammenstellung der Zusammensetzung und Materialeigenschaften einer hellen Asphaltbinderschicht. In der Tabelle wird Silica als Mineralstoff verwendet, welches 93 M-% oder mehr Siliziumdioxid ($SiO_2$) enthält. Silica wird in Minen abgebaut und in Fabrikanlagen entsprechend der Korngröße separiert und verarbeitet.

Tabelle 9:

| Helle Asphaltdeckschicht (Beispiel 3-3) | | | | | |
|---|---|---|---|---|---|
| Mischgutzusammensetzung | Mineralstoffe | Art | Silica | | |
| | | Zusammensetzung | Silica-Brechsand | 5,0/8,0 mm | 64,0 M-% |
| | | | | 2,5/5,0 mm | 13,0 M-% |
| | | | Silica-Brechsand und Silica-Sand | 0,0/2,5 mm | 9,0 M-% |
| | | | Silica-Steinmehl | 0,0/2,5 mm | 14,0 M-% |
| | | | $TiO_2$ | | 2,5 M-% |
| | Bindemittel | Art | Polymermodifiziertes Bindemittel (Mexphalte CP2, Deutsche Shell, Deutschland) | | |
| | | Gehalt | # 6,5 M-% | | |
| | stabilisierende Zusätze | 0,3 M-% Cellulosefasern (SMA Abocel, Clariant Polymer, Deutschland) # | | | |
| | | 0,6 M-% gefüllte Polyolefine (PR-Plast.S) # | | | |
| # bezogen auf die Gesamteinwaage | | | | | |

Die helle Asphaltdeckschicht gemäß Tabelle 9 wurde nach dem folgenden Verfahren hergestellt.

1. Die Mineralstoffe (Silica-Brechsand, Silica-Sand, Silica-Edelsteinmehl) wurden vorerhitzt (bei 170 °C für mindestens 12 Stunden).
2. Das Bindemittel (Mexphalte CP2) wurde vorerhitzt (bei 175 °C für weniger als 4 Stunden).
3. Das helle Pigment (Titandioxid) und der stabilisierende Zusatz (SMA Abocel) wurden auf Raumtemperatur von 23 °C vortemperiert.
4. Das helle Pigment (Titandioxid) wurde dem Bindemittel (Mexphalte CP2) zugesetzt und vorgemischt.
5. Die Mischung wurde erneut auf 175 °C für 0,5 Stunden erwärmt.
6. Der stabilisierende Zusatz (SMA Abocel) wurde der Bindemittelmischung (Bindemittel (Mexphalte CP2) + helles Pigment (Titandioxid)) zugegeben und vorgemischt.
7. Die hergestellte Bindermischung (Bindemittel (Mixphalte CP2) + helles Pigment (Titandioxid) + stabilisierender Zusatz (SMA Abocel)) wurde erneut auf 175 °C für weniger als 2 Stunden erwärmt.
8. Der stabilisierende Zusatz (PR-Plast.S) wurde zu den Mineralstoffen (Silica-Brechsand, Silica-Sand, Silica-Edelsteinmehl) zugegeben und die Mischung wurde vorerhitzt.
9. Die hergestellte Bindermischung (Bindemittel (Mexphalte CP2) + helles Pigment (Titandioxid) + stabilisierender Zusatz (SMA Abocel)) wurden zu den Mineralstoffen (Silica-Brechsand, Silica-Sand, Silica-Edelsteinmehl + stabilisierender Zusatz (PR-Plast.S)) zugefügt.
10. Die Mischung wurde von Hand für 5 Minuten gerührt.
11. Die Asphaltmischung (Mineralstoffe (Silica-Brechsand, Silica-Sand, Silica-Edelsteinmehl + Bindemittel (Mexphalte CP2) + helles Pigment (Titandioxid) + stabilisierender Zusatz (SMA Abocel)) wurde erneut erhitzt.
12. Marshal-Proben und eine Gussplatte wurden hergestellt (während dieser Herstellung lag die Temperatur der Mischung oberhalb von 160 °C).
13. Beide Seiten der Marshal-Proben wurden 75 mal mit einem Marshal-Hammer verdichtet (nach der Verdichtung lag die Temperatur oberhalb von 110 °C).

14. Basierend auf der Schüttdichte wurde die Gussplatte verdichtet.

Durch das vorstehend beschriebene Verfahren wurde ein helle Asphaltdeckschicht erhalten.

Untersuchungsmethode

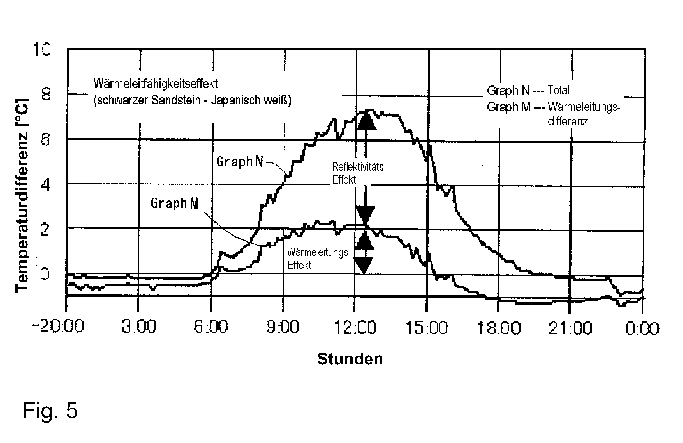

Die Untersuchungsmethode (ein Verfahren zur Temperaturmessung) wird anhand von Figur 5 beschrieben. Diese Untersuchungsmethode zur Messung von Temperaturen wurde an einem Asphaltstraßenbelag durchgeführt, der eine Binderschicht gemäß Beispiel 3-1 und eine Deckschicht gemäß Beispiel 3-3 umfasste. Die Untersuchungsmethode zur Temperaturmessung wird im Folgenden dargestellt. Zunächst wurde als Vergleichsstandard ein Temperatursensor a in einen Bereich einer Binderschicht eines konventionellen Asphalts (mit schwarzem Sandstein als Hauptkomponenten) eingesetzt und 2 cm darüber ein Temperatursensor b in die Deckschicht eingesetzt. Als Testobjekt wurde ein Temperatursensor A in einen Bereich der Binderschicht des Asphaltstraßenbelages, der die Binderschicht gemäß Beispiel 3-1 und die Deckschicht Beispiel 3-3 enthielt, eingesetzt und in einem Bereich 2 cm hierüber ein Temperatursensor B in die Deckschicht eingesetzt.

Dann wurden die Differenzen von Temperatursensor a und Temperatursensor A ((Temperatur angezeigt durch Temperatursensor a) - (Temperatur angezeigt durch Temperatursensor A)) und die Differenzen von Temperatursensor b und Temperatursensor B ((Temperatur angezeigt durch Temperatursensor b) - (Temperatur angezeigt durch Temperatursensor B)) während eines Tagesverlaufs von 0 bis 24 Uhr berechnet. In Figur 5 zeigt Graph M die Temperaturdifferenzen zwischen Temperatursensor a und Temperatursensor A; und Graph N die Temperaturdifferenzen zwischen Temperatursensor b und Temperatursensor B.

Da die Temperaturen des Temperatursensors A während der Untersuchungsstunden von etwa 6 bis 16 Uhr niedriger als die Temperaturen des Temperatursensors a waren (das heißt die Temperaturen des konventionellen Sandsteins (schwarzer Sandstein) waren höher), wird bestätigt, dass der Temperaturanstieg des Asphaltbelages nach Beispiel 3-1 während der Tageszeit bei vergleichsweise hohen Temperaturen reduziert wird. Die höchste Temperaturdifferenz lag um 2 °C. Somit kann die Asphaltbinderschicht gemäß Beispiel 3-1 den Temperaturanstieg verglichen mit der Asphaltbinderschicht aus Sandstein (schwarzer Sandstein) reduzieren. Der Grund hierfür ist, dass durch die Verwendung von Silica statt konventionellem Sandstein als Asphaltbaumaterial eine effizientere Wärmeableitung von der Oberfläche in den Untergrund erreicht wurde.

Ferner wurden im Oberflächenbereich, das heißt im nicht direkt durch das Sonnenlicht beschienenen Bereich, die Differenzen von Temperatursensor b und Temperatursensor B bestimmt. Während der Untersuchungsstunden von etwa 6 bis 20 Uhr waren die Temperaturen des Temperatursensors B niedriger als die Temperaturen des Temperatursensors b (das heißt die Temperaturen des konventionellen Sandsteins (schwarzer Sandstein) waren höher), was bestätigt, dass der Temperaturanstieg des Asphaltbelages gemäß Beispiel 3-3 noch weiter signifikant unterdrückt wurde. Die höchste Temperaturdifferenz lag bei etwa 8 °C. Somit konnte die Asphaltdeckschicht gemäß Beispiel 3-3 den Temperaturanstieg verglichen mit der Asphaltdeckschicht aus Sandstein (schwarzer Sandstein) vermindern. Der Grund hierfür ist, dass aufgrund der Verwendung von Silica statt konventionellem Sandstein als Asphaltbaumaterial der Albedo (Reflektivität von Sonnenlicht) der Oberfläche erhöht wurde und dass eine effizientere Wärmeableitung von der Oberfläche zum Untergrund erzielt wurde.

Die Wirkungen der Wärmeleitung entsprechen der Temperaturdifferenz der Binderschichten und die Reflektivität von Sonnenlicht entspricht der Differenzen der Temperaturdifferenzen der Decksichten - den Temperaturdifferenzen der Binderschichten (siehe Figur 5). Da die Sonne nicht auf die Binderschichten strahlt, resultieren die Temperaturdifferenzen der Binderschichten aus den Unterschieden der Wärmeleitfähigkeiten.

Wie oben beschrieben, zeichnet sich der Asphaltbelag 10 durch folgende Merkmale aus:

1. Hohes Reflexionsvermögen der Oberfläche der Deckschicht 14 durch hellen Mineralstoff und helles eingefärbtes Bindemittel (alternativ durch Bindemittelfilm abtragende Oberflächenbehandlung der hellen Mineralstoffe bei Anwendung des dunklen Bindemittels);
2. hohes Wärmeeindringvermögen durch hohe Wärmeleitfähigkeit des Quarzes;
3. hohe Biegesteifigkeit durch hohen Resilient Modulus, geringe plastische Verformbarkeit und große Dicke der biegesteifen Binderschicht und
4. geringer thermischer Ausdehnungskoeffizient durch Einsatz von Quarz und polymermodifiziertem Bindemittel sowie hinreichend großem Hohlraumgehalt für thermische Ausdehnung des Bindemittels.

Nachfolgend werden wichtige Daten der in der vorliegenden Erfindung eingesetzten Materialien gezeigt. Tabellen 10 und 11 zeigen Normwerte gemäß TL-PmB 2002 zusammen mit typischen Werten von Caribit 25 und 45 der Firma Shell GmbH, Deutschland (Caribit 25 entspricht der Sorte PmB 25 A und Caribit 45 entspricht der Sorte PmB 45 A), die vorliegend als Bindemittel eingesetzt wurden. Tabelle 12 zeigt Normwerte und typische Werte von Mexphalte CP2 der Firma Shell GmbH, Deutschland, das als Bindemittel eingesetzt wurde. Tabelle 13 zeigt Normwerte und typische Werte von PR-Plast.S der Firma Produit Route Co., das als stabilisierender Zusatz eingesetzt wurde. Tabelle 14 zeigt die mittlere Korngrößenverteilung, einen chemischen Assay sowie charakteristische Werte von Microsil type 3 der Firma Euroquartz GmbH, Deutschland, das als Mineralstoff eingesetzt wurde.

Tabelle 10:

| Caribit 25 - Polymermodifiziertes Bitumen in Übereinstimmung mit TL-PmB 2001 | | | | |
|---|---|---|---|---|
| | | Normwerte | Typische Werte | Prüfverfahren |
| Penetration (25°C) | 0.1mm | 10-40 | 25 | EN 1426 |
| Erweichungspunkt (Ring-Kugel-Test)°C | | 63-71 | 68 | EN 1427 |
| Brechpunkt | °C | max. -5 | -10 | EN 12 593 |
| Duktilität (25°C) | cm | min. 20 | 45 | DIN 52 013 |
| Dichte (25°C) | g/cm$^3$ | 1,00-1,10 | 1,03 | DIN 52 004 |
| Flammpunkt | °C | min. 235 | 300 | EN 22 592 |
| Elastische Rückstellung | % | min. 50 | 57 | DIN V 52 021-1 |
| Lagerungsstabilität (180°C, 3d) Änderung der Erweichungspunkte (Ring-Kugel-Test (RK)) | | Max. 2,0 | 0,0 | TL-PmB 2001 |
| Härtungswiderstand (RTFOT oder RFT) Massenänderung Änderung der Erweichungspunkte (RK) | % | Max. 0,5 | 0 | EN 12607-3 |
| Anstieg °C Abnahme °C | | Max. 8,0 Max. 2,0 | 6,0 - | EN 1427 |
| Änderung der Penetration verbleibend % Anstieg % Duktilität (25°C) cm Elastische Rückstellung % | | Min. 60 Max. 10 Min. 10 Min. 50 | 75 - 18 55 | EN 1426 DIN 52 013 DIN V 52 021-1 |
| BBR Steifigkeit (-16°C) | MPa | Max. 350 | 310 | AASHTO TP-1 |
| DSR Komplexer Elastizitätsmodulus G (60°C) Pa | | Min. 15000 | 21000 | AASHTO TP-5 |
| DSR Phasenwinkel δ (60°C) ° | | Max. 70 | 67 | AASHTO TP-5 |

Tabelle 11:

| Caribit 45 - Polymermodifiziertes Bitumen in Übereinstimmung mit TL-PmB 2001 | | | | |
|---|---|---|---|---|
| | | Normwerte | Typische Werte | Prüfverfahren |
| Penetration (25°C) | 0.1mm | 20-60 | 30 | EN 1426 |
| Erweichungspunkt (Ring-Kugel-Test)°C | | 55-63 | 60 | EN 1427 |
| Brechpunkt | °C | max. -10 | -14 | EN 12 593 |
| Duktilität (25°C) | cm | min. 40 | 80 | DIN 52 013 |
| Dichte (25°C) | g/cm$^3$ | 1.00-1.10 | 1.03 | DIN 52 004 |
| Flammpunkt | °C | min. 235 | 300 | EN 22 592 |
| Elastische Rückstellung | % | min. 50 | 57 | DIN V 52 021-1 |
| Lagerungsstabilität (180°C, 3d) Änderung des Erweichungspunkts (Ring-Kugel-Test (RK)) | | max. 2 | 0.0 | TL-PmB 2001 |
| Härtungswiderstand (RTFOT oder RFT) Masseänderung % | | Max. 0.5 | 0 | EN 12607-3 |

(fortgesetzt)

| Änderung des Erweichungspunkts (RK) | | | | EN 1427 |
|---|---|---|---|---|
| Anstieg °C | | Max. 8.0 | 5.0 | |
| Abnahme °C | | Max. 2.0 | - | EN 1426 |
| Änderung der Penetration | | | | |
| verbleibend % | | Min. 60 | 75 | DIN 52 013 |
| Anstieg % | | Max. 10 | - | DIN V 52 021-1 |
| Duktilität (25°C) | cm | Min. 50 | 65 | |
| Elastische Rückstellung | % | Min. 50 | 55 | |
| BBR Steifigkeit (-16°C) | MPa | Max. 300 | 250 | AASHTO TP-1 |
| DSR Komplexer Elastizitätsmodulus G (60°C) Pa | | Min. 7000 | 9500 | AASHTO TP-5 |
| DSR Phasenwinkel δ (60°C) ° | | Max. 75 | 70 | AASHTO TP-5 |

Tabelle 12:

| Mexphalte C P2 - Polymermodifiziertes einfärbbares Bindemittel | | | | |
|---|---|---|---|---|
| | | Normwerte | Typische Werte | Prüfverfahren |
| Penetration (25°C) | 0.1mm | 35-45 | 35 | DIN EN 1426 |
| Erweichungspunkt (Ring-Kugel-Test) °C | | 54-60 | 58 | DIN EN 1427 |
| Dichte (25°C) | g/cm$^3$ | 1,0-1,1 | 1,008 | DIN 52 004 |
| Lösllichkeit | wt. % | Min. 99 | 99,8 | DIN EN 12 592 |
| Brechpunkt | °C | max. -15 | -16 | DIN EN 12 593 |
| Flammpunkt (open cup) | °C | min. 230 | 250 | DIN EN 22 592 |
| Duktilität (25°C) | cm | min. 60 | 100 | DIN 52 013 |
| Lastduktilität: Energie bis 20 cm | J | | 0.98 | prEN 13 589 |
| Lastduktilität: Energie bis Bruch | J | | 8.59 | prEN 13 589 |
| Elastische Rückstellung | % | min. 50 | 90 | DIN 52 021 |
| Lagerungsstabilität (180°C, 3d) Änderung des Erweichungspunkts (Ring-Kugel-Test (RK)) | | Max. 2 | 0.0 | TL-PmB 2001 |
| Alterungsverhalten | | | | DIN EN 12607-3 |
| Masseänderung | % | Max. 0.5 | 0.05 | |
| verbleibende Penetration | % | Min. 55 | 97 | |
| Änderung des Erweichungspunkts | °C | Max. 6.5 | -3.5 | |
| Duktilität (25°C) | cm | Min. 40 | 78 | |
| Lastduktilität: Energie bis 20 cm | J | | 0.74 | |
| Lastduktilität: Energie bis Bruch | J | | 3.16 | |

Tabelle 13:

| PR Plast.S | | |
|---|---|---|
| Merkmal | Wert | Einheit |
| Form | schwarze linsenartige Pellets | |
| Dichte | 0,91-0,965 | g/cm$^3$ |
| Polyolefingehalt | 95 | % |
| Fillergehalt | 5 | % |
| Schmelzpunkt | 140-150 | °C |
| Partikelgröße | 4 | mm |

Tabelle 14:

| Microsil type 3 | | |
|---|---|---|
| Mittlere Kornqrößenverteilung | | |
| Siebgröße (μm) | Verbleibender Anteil (%) | Passierender Anteil (%) |
| 300 | 0 | 100 |
| 250 | 0 | 99 |
| 200 | 2 | 98 |
| 160 | 6 | 94 |
| 100 | 32 | 68 |
| 63 | 56 | 44 |
| 40 | 68 | 32 |
| <40 | 100 | 0 |

| Chemisches Assay | |
|---|---|
| | Gehalt (M-%) |
| SiO$_2$ | >99,5 |
| Al$_2$O$_3$ | 0,11 |
| Fe$_2$O$_3$ | 0,030 |
| TiO$_2$ | 0,067 |

| Daten | |
|---|---|
| Schüttdichte (g/cm$^3$) | 1,3 |
| Dichte (g/cm$^3$) | 2,65 |
| Mohs Härte | 7 |
| Verbrennungsverlust (%) | <0,1 |
| Wasser (%) | <0,1 |
| Sintertemperatur (°C) | 1575 |
| Spezifische Oberfläche(cm$^2$/g) | 1600 |

Obwohl die vorliegende Erfindung vorstehend anhand individueller Ausgestaltungen beschrieben wurde, ist die Erfindung nicht auf diese Beispiele beschränkt. Dem Straßenbelag gemäß der vorliegenden Erfindung wird genüge getan, wenn mindestens 60 M-% der in der Asphaltschicht enthaltenen Mineralstoffe (insbesondere der Deckschicht und der Binderschicht) kristalliner Quarz ist. Als Materialien, die diese Mineralstoffe enthalten und diese Anforderungen erfüllen, können beispielsweise Silica (mit Korngrößen im Bereich von großen Aggregaten bis Sand, kein Feldspat enthaltend) oder Silica-Sand (Sand mit höchstens 5 mm, häufig Feldspat aufweisend, anderenfalls reine Quarzkörner enthaltend) eingesetzt werden. In diesem Zusammenhang können Silica-Materialien oder künstlicher Silica-Sand, Chart, Quarzit und Quarzteile von Quarzgesteinen eingesetzt werden. Ebenso kann natürliches Silica verwendet werden.

Anstelle der in den beschriebenen Ausführungen eingesetzten Bindemitteln können bekannte Materialien eingesetzt werden, welche in japanischen Fachkreisen als modifizierter Typ 1, modifizierter Typ 2 und/oder modifizierter Typ 3 bekannt sind. Diese Bindermaterialien können in Übereinstimmung mit den gewünschten Asphalteigenschaften eingesetzt werden und ferner können andere als die oben beschriebenen stabilisierenden Zusätze, Bindermaterialien und/oder andere modifizierte Verstärkungsmaterialien Verwendung finden.

Industrielle Anwendbarkeit

Der erfindungsgemäße Straßenbelag ist geeignet, die Spurrinnenbildung bei hoher thermomechanischer Beanspruchung im Sommer sowie die Längsrisse entlang der Spurrinnen im Winter selbst unter den Bedingungen des innerstädtischen Klimas in Großstädten und sonstigen Ballungsräumen zu mindern.

Bezugzeichen, Abkürzungen

| | |
|---|---|
| 10 | Straßenbelag |
| 12 | Binderschicht |
| 14 | Deckschicht |
| 16 | Mineralstoff / kristalliner Quarz |
| 18 | Bindemittel / polymermodifiziertes Bitumen |
| 20 | Hohlräume |
| 22 | Mineralstoff / kristalliner Quarz |
| 24 | Bindemittel / polymermodifiziertes einfärbbares Bindemittel |
| 26 | Hohlräume |
| 28 | stabilisierender Zusatz |

M-% Massenanteil
Vol-% Volumenanteil
$d_1$ Schichtdicke Deckschicht
$d_2$ Schichtdicke Binderschicht

$$b = \sqrt{\lambda \cdot \rho \cdot c_p}$$

mit

b Wärmeeindringkoeffizient
$\lambda$ Wärmeleitfähigkeit
$\rho$ Trockenrohdichte bzw. Raumdichte
$c_p$ spezifische Wärmekapazität

**Patentansprüche**

1. Straßenbelag (10) mit mindestens einer Asphaltschicht (12, 14), die ein Gemisch aus mindestens einem Mineralstoff (16, 22) und mindestens einem Bindemittel (18, 24) enthält, **dadurch gekennzeichnet, dass** mindestens 60 M-% des Mineralstoffs (16, 22) der mindestens einen Asphaltschicht (12, 14) kristalliner Quarz ist.

2. Straßenbelag (10) nach Anspruch 1, **dadurch gekennzeichnet, dass** mindestens 90 M-%, insbesondere mindestens 95 M-%, vorzugsweise mindestens 97 M-% des Mineralstoffs (22) der mindestens einen Asphaltschicht (12, 14) kristalliner Quarz ist.

3. Straßenbelag (10) nach Anspruch 1 oder 2, **dadurch gekennzeichnet, dass**
der kristalline Quarz einen Massenanteil an Siliziumdioxid ($SiO_2$) von mindestens 93 M-% und eine Schmelztemperatur von mindestens 1500 °C besitzt.

4. Straßenbelag (10) nach Anspruch 3, **dadurch gekennzeichnet, dass**
der kristalline Quarz kristalliner gebrochener Quarz ist und insbesondere eine Mischung aus mindestens einem Quarz-Edelsplitt und mindestens einem Quarz-Edelbrechsand und Quarz-Steinmehl ist.

5. Straßenbelag (10) nach einem der vorhergehenden Ansprüche, **dadurch gekennzeichnet, dass**
der Straßenbelag (10) mindestens zwei Asphaltschichten umfasst mit einer oberen Deckschicht (14) und einer darunter liegenden Binderschicht (12), wobei die Deckschicht (14) und/oder die Binderschicht (12) jeweils mindestens 60 M-% kristallinen Quarz als Mineralstoff (16, 22) enthält.

6. Straßenbelag (10) nach Anspruch 5, **dadurch gekennzeichnet, dass**
der Mineralstoff in der Deckschicht (14) eine Korngrößenverteilung von 0 bis 8 mm aufweist.

7. Straßenbelag (10) nach Anspruch 6, **dadurch gekennzeichnet, dass**
der Mineralstoff der Deckschicht (14) folgende Korngrößenverteilung aufweist:
70-80 M-%, insbesondere etwa 75 M-%, entsprechen einem Korngrößenbereich von 2 bis 8 mm;
8-18 M-%, insbesondere etwa 13 M-%, entsprechen einem Korngrößenbereich von 0,09 bis 2 mm und
7-17 M-%, insbesondere etwa 12 M-%, entsprechen einem Korngrößenbereich von 0 bis 0,09 mm.

8. Straßenbelag (10) nach einem der Ansprüche 5 bis 7, **dadurch gekennzeichnet, dass**
der Mineralstoff der Binderschicht (12) eine Korngrößenverteilung von 0 bis 16 mm aufweist.

9. Straßenbelag (10) nach Anspruch 8, **dadurch gekennzeichnet, dass**
der Mineralstoff der Binderschicht (12) folgende Korngrößenverteilung aufweist: 70-80 M-%, insbesondere etwa 73 M-%, entsprechen einem Korngrößenbereich von 2 bis 16 mm;
15-30 M-%, insbesondere etwa 21 M-%, entsprechen einem Korngrößenbereich von 0,09 bis 2 mm und
3-10 M-%, insbesondere etwa 6 M-%, entsprechen einem Korngrößenbereich von 0 bis 0,09 mm.

10. Straßenbelag (10) nach einem der Ansprüche 5 bis 9, **dadurch gekennzeichnet, dass**
die Deckschicht (14) eine mittlere Einbaudicke ($d_1$) im Bereich von 2,0 bis 3,0 cm und die Binderschicht (12) eine mittlere Einbaudicke ($d_2$) im Bereich von 8,5 bis 11,0 cm aufweist.

11. Straßenbelag (10) nach Anspruch 10, **dadurch gekennzeichnet, dass**
die Deckschicht (14) eine mittlere Einbaudicke ($d_1$) von etwa 2,5 cm und die Binderschicht (12) eine mittlere Einbaudicke ($d_2$) von etwa 9,5 cm aufweist.

12. Straßenbelag (10) nach einem der vorhergehenden Ansprüche, **dadurch gekennzeichnet, dass**
die mindestens eine Asphaltschicht (12, 14) als Bindemittel (18, 24) ein polymermodifiziertes Bitumen oder ein polymermodifiziertes synthetisches Bindemittel enthält.

13. Straßenbelag (10) nach Anspruch 12, **dadurch gekennzeichnet, dass**
die Binderschicht (12) als Bindemittel (18) ein polymermodifiziertes Bitumen der Sorte PmB 25 A enthält.

14. Straßenbelag (10) nach Anspruch 12 oder 13, **dadurch gekennzeichnet, dass**
die Deckschicht (14) als Bindemittel (24) ein polymermodifiziertes Bitumen der Sorte PmB 45 A enthält.

15. Straßenbelag (10) nach Anspruch 14, **dadurch gekennzeichnet, dass**
die Oberfläche der Deckschicht (14) durch eine Bindemittelfilm abtragende Behandlung, insbesondere durch Sandstrahlen, bearbeitet ist.

16. Straßenbelag (10) nach Anspruch 12 oder 3, **dadurch gekennzeichnet, dass**
die Deckschicht (14) ein helles, transparentes, semitransparentes und/oder mit Pigmenten einfärbbares Bindemittel (24) enthält.

**17.** Straßenbelag (10) nach Anspruch 16, **dadurch gekennzeichnet, dass**
die Deckschicht (14) ein mit Titandioxid TiO$_2$ eingefärbtes polymermodifiziertes Bindemittel (24) enthält.

**18.** Straßenbelag (10) nach einem der Ansprüche 5 bis 17, **dadurch gekennzeichnet, dass**
die Deckschicht (14) und/oder die Binderschicht (12) mindestens einen stabilisierenden Zusatz (28) enthält.

**19.** Straßenbelag (10) nach Anspruch 18, **dadurch gekennzeichnet, dass**
die Deckschicht (14) als stabilisierenden Zusatz (28) Cellulosefasern und/oder ein gefülltes Polyolefin enthält.

**20.** Straßenbelag (10) nach Anspruch 18 oder 19, **dadurch gekennzeichnet, dass**
die Binderschicht (12) als stabilisierenden Zusatz ein gefülltes Polyolefin enthält.

**21.** Straßenbelag (10) nach einem der Ansprüche 5 bis 20, **dadurch gekennzeichnet, dass**
die Deckschicht (14) einen Hohlraumgehalt im Bereich von 1,0 bis 6,0 Vol-%, insbesondere von 2,0 bis 5,0 Vol-%, vorzugsweise von 3,0 bis 4,0 Vol-%, aufweist.

**22.** Straßenbelag (10) nach einem der Ansprüche 5 bis 20, **dadurch gekennzeichnet, dass**
die Binderschicht (12) einen Hohlraumgehalt im Bereich von 2,0 bis 9,0 Vol-%, insbesondere von 3,0 bis 8,0 Vol-%, vorzugsweise von 4,0 bis 7,0 Vol-%, aufweist.

**23.** Straßenbelag (10) mit mindestens zwei Asphaltschichten, umfassend eine obere Deckschicht (14) und eine darunter liegende Binderschicht (12), wobei die Deckschicht (14) und/oder die Binderschicht (12) jeweils ein Gemisch aus mindestens einem Mineralstoff (16, 22) und einem Bindemittel (18, 24) enthalten, **dadurch gekennzeichnet, dass**
die Deckschicht (14) folgende Zusammensetzung aufweist:
80 bis 95 M-% kristalliner gebrochener Quarz (22),
6,0 bis 8,0 M-% eines einfärbbaren, polymermodifizierten Bindemittels (24),
0,3 bis 2,0 M-% mindestens eines stabilisierenden Zusatzes (28) und
0,1 bis 3,0 M-% eines weißen mineralischen Pigments bezogen auf den Mineralstoffgehalt.

**24.** Straßenbelag (10) mit mindestens zwei Asphaltschichten, umfassend eine obere Deckschicht (14) und eine darunter liegende Binderschicht (12), wobei die Deckschicht (14) und/oder die Binderschicht (12) jeweils ein Gemisch aus mindestens einem Mineralstoff (16, 22) und einem Bindemittel (18, 24) enthalten, **dadurch gekennzeichnet, dass**
die Deckschicht (14) folgende Zusammensetzung aufweist:
80 bis 95 M-% kristalliner gebrochener Quarz (22),
6,0 bis 8,0 M-% eines polymermodifizierten Bindemittels (24),
0,3 bis 2,0 M-% mindestens eines stabilisierenden Zusatzes (28) und
die Oberfläche der Deckschicht (14) durch eine Bindemittelfilm abtragende Behandlung bearbeitet ist.

**25.** Straßenbelag (10) mit mindestens zwei Asphaltschichten, umfassend eine obere Deckschicht (14) und eine darunter liegende Binderschicht (12), wobei die Deckschicht (14) und/oder die Binderschicht (12) jeweils ein Gemisch aus mindestens einem Mineralstoff (16, 22) und einem Bindemittel (18, 24) enthalten, **dadurch gekennzeichnet, dass**
die Binderschicht (12) folgende Zusammensetzung aufweist:
94 bis 96,5 M-% kristalliner gebrochener Quarz (16) und
3,5 bis 6,0 M-% eines polymermodifizierten Bindemittels (18).

**26.** Straßenbelag (10) nach einem der Ansprüche 1 bis 25, wobei Silica anstelle von kristallinem Quarz eingesetzt wird.

Fig. 1

Fig. 2

Fig. 3

(a) Temperatur des Straßenbelags im Sommer

(b) Temperatur des Straßenbelags im Winter

Fig. 4

Fig. 5

## INTERNATIONAL SEARCH REPORT

| International application No. |
| --- |
| PCT/JP2004/019076 |

| A. CLASSIFICATION OF SUBJECT MATTER |
| --- |
| Int.Cl$^7$ E01C7/26, C08L95/00, C08K3/34 |
| |
| According to International Patent Classification (IPC) or to both national classification and IPC |

| B. FIELDS SEARCHED |
| --- |
| Minimum documentation searched (classification system followed by classification symbols) |
| Int.Cl$^7$ E01C7/26, C08L95/00, C08K3/34 |

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y<br>X | JP 2003-213609 A (Nippon Hodo Kabushiki Kaisha),<br>30 July, 2003 (30.07.03),<br>Full text; all drawings<br>Full text; all drawings<br>(Family: none) | 1-25<br>26 |
| Y | JP 2003-292785 A (Nippon Shokubai Co., Ltd.),<br>15 October, 2003 (15.10.03),<br>Par. Nos. [0049] to [0056]<br>(Family: none) | 1-25 |
| Y | JP 9-143908 A (Kabushiki Kaisha Nabeshima Kosan),<br>03 June, 1997 (03.06.97),<br>Full text; all drawings<br>(Family: none) | 1-25 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 March, 2005 (14.03.05) | 05 April, 2005 (05.04.05) |

| Name and mailing address of the ISA/<br>Japanese Patent Office | Authorized officer |
| --- | --- |
| Facsimile No. | Telephone No. |

Form PCT/ISA/210 (second sheet) (January 2004)

**INTERNATIONAL SEARCH REPORT**

International application No.

PCT/JP2004/019076

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-000609 A (Daikichi SUEMATSU),<br>06 January, 1999 (06.01.99),<br>Par. No. [0014]<br>(Family: none) | 1-25 |
| Y | JP 57-129833 A (Redland Technology Ltd.),<br>12 August, 1982 (12.08.82),<br>Page 9, lower right column, lines 19 to 20<br>& AR 0225828 A1     & AU 7385781 A<br>& BR 8105222 A     & CA 1176843 A1<br>& ZA 8105386 A     & US 4385917 A<br>& EP 0046376 A1 | 3-22 |
| Y | JP 2001-072860 A (Nichireki Kabushiki Kaisha),<br>21 March, 2001 (21.03.01),<br>Full text; all drawings<br>(Family: none) | 5-25 |
| Y | WO 1999/011737 A1 (Schümann Sasol GmbH),<br>11 March, 1999 (11.03.99),<br>Par. No. [0030]<br>& AU 9437298 A     & BR 9812146 A<br>& CA 2302053 A1     & CN 1276820 A<br>& DE 19838770 A1     & EP 1254925 A2<br>& HU 0003560 A2     & NO 20000920 A | 13-22 |
| Y | JP 5-079008 A (Nippon Hodo Kabushiki Kaisha),<br>30 March, 1993 (30.03.93),<br>Par. Nos. [0016] to [0019]<br>(Family: none) | 15-22,24 |
| Y | JP 2001-158857 A (Kabushiki Kaisha Emuaitekku),<br>12 June, 2001 (12.06.01),<br>Par. No. [0003]<br>(Family: none) | 18-24 |

Form PCT/ISA/210 (continuation of second sheet) (January 2004)